(19) **Europäisches Patentamt / European Patent Office / Office européen des brevets**

(11) **EP 2 249 326 A1**

(12) **EUROPEAN PATENT APPLICATION**
published in accordance with Art. 153(4) EPC

(43) Date of publication:
**10.11.2010 Bulletin 2010/45**

(21) Application number: **09715400.9**

(22) Date of filing: **25.02.2009**

(51) Int Cl.:
***G09C 1/00*** *(2006.01)*

(86) International application number:
**PCT/JP2009/053395**

(87) International publication number:
**WO 2009/107650 (03.09.2009 Gazette 2009/36)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **25.02.2008 JP 2008043462**

(71) Applicant: **National University Corporation Okayama University**
**Kita-ku**
**Okayama-shi**
**Okayama 700-8530 (JP)**

(72) Inventors:
• **NOGAMI, Yasuyuki**
**Kita-ku**
**Okayama-shi**
**Okayama 700-8530 (JP)**

• **MORIKAWA, Yoshitaka**
**Kita-ku**
**Okayama-shi**
**Okayama 700-8530 (JP)**
• **KATO, Hidehiro**
**Kita-ku**
**Okayama-shi**
**Okayama 700-8530 (JP)**
• **AKANE, Masataka**
**Kita-ku**
**Okayama-shi**
**Okayama 700-8530 (JP)**

(74) Representative: **Gendron, Vincent Christian et al**
**S.A. Fedit-Loriot**
**38, avenue Hoche**
**75008 Paris (FR)**

(54) **SCALAR MULTIPLICATION METHOD, RAISING METHOD, RECORDING MEDIUM WHERE SCALAR MULTIPLICATION PROGRAM IS RECORDED, AND RECORDING MEDIUM WHERE RAISING METHOD PROGRAM IS RECORDED**

(57) There are provided a computation method for scalar multiplication or exponentiation and a scalar multiplication program or an exponentiation program which can compute at high speed. In the computation method for scalar multiplication and the scalar multiplication program for computing scalar multiplication by n of a rational point Q in G with respect to a non-negative integer n using an electronic computer, since $\phi_q(Q)=[q]Q=[t-1]Q$ holds true with respect to the rational point Q in G, (t-1)-adic expansion of a scalar n is performed and a Frobenius endomorphism $\phi_q$ with respect to a rational point is used in place of t-1. Further, in the computation method for exponentiation and the exponentiation program for computing exponentiation of an element A in H to the power of n with respect to a non-negative integer n using an electronic computer, letting a difference of q and r be s=q-r, since $\phi_q(A)=A^q=A^s$ holds true with respect to the non-zero element A in H, s-adic expansion of an exponent n is performed and a Frobenius endomorphism $\phi_q$ with respect to an element is used in place of s.

**Description**

Field of the Invention

The present invention relates to a method for scalar multiplication which speeds up scalar multiplication by performing at least (t-1)-adic expansion of n in multiplication of a rational point Q and a scalar n, and a recording medium which records a scalar multiplication program, a method of exponentiation which speeds up exponentiation by performing at least (q-r)-adic expansion of n in exponentiation of an element A to the power of n, and a recording medium which records an exponentiation program.

Description of the Related Art

Recently, since information network technology utilizing telecommunication lines such as the Internet has developed to a high degree, it has been possible not only to get various information through the Internet but also to provide a variety of services such as internet banking and electronic application to administrative agencies.
In the case of using the services, there needs an authentication processing to confirm that a user of the service is not an impersonate person nor an imaginary person but a proper user. There has been available, as a highly reliable authentication method, an electronic authentication technology based on public key cryptography which uses a public key and a secret key.
However, in the case of electronic authentication system using public-key cryptography, when the leakage of a public key or a secret key occurs, it is necessary to change the public key and the secret key immediately and it is cumbersome that set up and registration work of a new public key and a new secret key arises as needed as well as management of public keys and secret keys must be handled carefully. Accordingly, in recent years, ID-based cryptography has become dominant, which performs electronic authentication using ID unique to a user such as the name or the E-mail address of the user.
Further, in the case where personal authentication of a user is performed by authentication device which performs electronic authentication, a history of every user is accumulated in the authentication device. Since this history information itself is private information of the user, a possibility of the leakage of personal information through the leakage of this history information has been pointed out recently.
Consequently, there has been proposed a group signature technology which makes it possible to perform authentication without accumulating private information in the authentication device. In the group signature technology, the authentication device, instead of performing authentication using private information of a user, performs authentication without identifying the user using group signature which shows that the user belongs to a certain group assuming a plurality of users as a group.
In the required computations for the ID-based cryptography and the group signature, a technique called paring is employed which uses a bilinear mapping of rational points on an elliptic curve. Pairing is an operation such that, for example, letting P be a rational point over a prime field $F_q$, Q be a rational point over a k-th extension field $F_q^k$, in a case when P and Q are inputted an element z in an extension field $F^*_q{}^k$ is outputted, when a times P and b times Q are inputted, z to the power of ab is outputted. Here, "k" is called an embedding degree and "$F^*q^k$" is meant to be correctly displayed as in the following representation, but due to display restrictions, it is denoted as $F^*q^k$.
$$[F1]$$

$$F^*{}_{q^k}$$

In encryption or decryption processing in ID-based cryptography and in authentication processing in the group signature, the processing needs to be executed in a shortest possible period of time. In particular, since a multitude of scalar multiplications and exponentiations are performed in paring based cryptography and the like, these computations need to be performed at high speed.
Accordingly, there has been proposed to speed up scalar multiplication and exponentiation using a binary method, a window method or the like.
Further, in the case of computing an exponentiation An of an element A in an extension field $A \in F_q^k$, there has been also proposed to speed up by reducing the number of operations with the use of the Frobenius Mapping $\phi_q : A \rightarrow A^q$.
Still further, in the case of scalar multiplication, there has been proposed a technique to speed up by reducing the number of operations with the use of a mapping (for example, see patent document 1, patent document 2.).

Patent document 1: JP-A-2004-271792.
Patent document 2: JP-A-2007-41461.

SUMMARY OF THE INVENTION

However, although the well known speed-up means to speed up the scalar multiplication and the exponentiation using a mapping is very effective when scalar n in the scalar multiplication or exponent n in the exponentiation exceeds greatly order q of a finite field $F_q$ (n>q), it is difficult to find significant effect compared with the case where the scalar multiplication and the exponentiation are performed directly without using the speeding up means when scalar n or exponent n does not exceed greatly the order q of the finite field $F_q$.

In particular, in encryption or decryption processing in ID-based cryptography and in authentication processing in group signature, in the case where scalar multiplication using scalar n or exponentiation using exponent n is needed, there are many cases where scalar n or exponent n does not exceed greatly the order q of the finite field $F_q$. Accordingly, it is difficult to expect effective speeding up even when using the well known speeding up means.

In view of the present situation, the inventors have made a study for a computation method which enables to perform scalar multiplication or exponentiation at high speed even when the scalar n or the exponent n does not exceed greatly the order q of the finite field $F_q$, and have made the invention.

According to a first aspect of the present invention, there is provided a computation method for scalar multiplication, in which an elliptic curve is assumed to be

$$E/F_q = x^3 + ax + b - y^2 = 0, \quad a \in F_q, \quad b \in F_q,$$

letting:

E($F_q$) be an additive group constituted of rational points on the elliptic curve defined over a finite field $F_q$;
E($F_q^k$) be an additive group constituted of rational points on the elliptic curve defined over an extension field $F_q^k$ of the finite field $F_q$;
$\phi_q$ be a Frobenius endomorphism of a rational point with respect to the finite field $F_q$;
t be a trace of the Frobenius endomorphism $\phi_q$;
r be a prime order which divides an order of E($F_q$), #E($F_q$)=q+1-t;
E[r] be a set of rational points having an order of the prime number r;
[j] be a mapping which multiplies a rational point by j;
and
G be a set of rational points contained in E($F_q^k$) which satisfy

$$G = E[r] \cap \mathrm{Ker}(\phi_q - [q]),$$

an electronic computer including a CPU and a memory means computes a scalar multiplication by n of a rational point Q in G with respect to a non-negative integer n.

The computation method for scalar multiplication includes:

an input step where the CPU inputs values of the non-negative integer n, the trace t, and a rational point Q represented by Q∈G⊂E($F_q^k$) and stores the values in the memory means;
an initialization step where the CPU initializes the memory means which stores a computation result Z;
an expansion step where, since

$$\phi_q(Q) = [q]Q = [t-1]Q$$

holds true with respect to a rational point Q in G, letting s=t-1, based on the following formula in which s-adic expansion of said n is performed,

［F2］

$$n = \sum_i c[i]s^i, \ 0 \le c[i] \le s$$

the CPU performs assignment operations represented by c[i] ←n%s and n←(n-c[i]/s repeatedly from i=0 predetermined times and stores the values of each coefficient c[i] and the non-negative integer n in the memory means;
a computation step where the CPU reads out the rational point Q and the coefficient c[i] from the memory means and performs an assignment operation represented by Q[i]=c[i]Q repeatedly from i=0 predetermined times and stores the values of each Q[i] in the memory means; and
a composition step where, based on the following formula of scalar multiplication nQ represented by using the Frobenius endomorphism $\phi_q$ with respect to a rational point in place of t-1,

［F3］

$$nQ = \sum_i \ \phi_q^{\ i}(Q[i])$$

the CPU reads out Q[i] and the computation result Z from the memory means and performs an assignment operation represented by Z←Z+$\phi_q$i(Q[i]) repeatedly from i=0 predetermined times and stores the computation result Z of the scalar multiplication in the memory means.

According to a second aspect of the present invention, there is provided a computation method for scalar multiplication, wherein the order q of the finite field $F_q$ of the elliptic curve, the prime order r which divides #E($F_q$), and the trace t of the Frobenius endomorphism $\phi_q$ are given respectively as q($\chi$), r($\chi$), and t($\chi$) using an integer variable $\chi$. The computation method for scalar multiplication further includes:

an auxiliary input step where the CPU inputs respective values of the q($\chi$), r($\chi$), and t($\chi$) and stores the values in the memory means;
an auxiliary expansion step where the CPU reads out the values of the r($\chi$) and t($\chi$) from the memory means and, letting the s($\chi$)=t($\chi$)-1, based on the following formula in which s(x)-adic expansion of r($\chi$) is performed,

［F4］

$$r(\chi) = \sum_{i=0}^{\lceil \deg r(\chi)/\deg s(\chi) \rceil} D_i(\chi)s(\chi)^i, \ 0 \le \deg\big(D_i(\chi)\big) < deg\big(s(\chi)\big)$$

performs assignment operations represented by $D_i(\chi)$← r($\chi$)%s($\chi$) and r($\chi$)←(r($\chi$)-$D_i(\chi)$)/s($\chi$) repeatedly from i=0 to i<⌈degr($\chi$)/degs($\chi$)⌋ and stores the values of each coefficient $D_i(\chi)$ and r($\chi$) in the memory means;
an auxiliary extraction step where the CPU extracts $D_i(\chi)$ having the maximum deg($D_i(\chi)$) among the stored coefficients $D_i(\chi)$ as $D_{dmax}(\chi)$ and stores the $D_{dmax}(\chi)$ in the memory means;
an auxiliary specifying step where the CPU reads out the values of $D_{dmax}(\chi)$, $D_i(\chi)$, and Q from the memory means and, using a polynomial f($\phi_q$,$\chi$) which satisfies

$$\phi_q^{dmax}([D_{dmax}(\chi)]Q) = \sum \phi_q^i([D_i(\chi)]Q - \phi_q^{dmax}([D_{dmax}(\chi)]Q)$$

$$= [f(\phi_q, \chi)]Q$$

based on $\phi_q$kQ=Q, specifies a polynomial h($\phi_q$,X)which satisfies

$$[D_{dmax}(\chi)]Q=[f(\phi_q, \chi)\phi_q^{-dmax}]Q=h(\phi_q, \chi)]Q$$

and stores the value of the polynomial $h(\phi_q,\chi)$ in the memory means; and
a step where the CPU , letting $\chi=a$, replaces the s-adic expansion with $D_{dmax}(a)$-adic expansion with $S=D_{dmax}(a)$ and uses the polynomial $h(\phi_q,a)$ in place of said $D_{dmax}(a)$.

According to a third aspect of the present invention, there is provided a computation method for scalar multiplication, wherein there exist a plurality of coefficients $D_i(\chi)$ having the maximum degree dmax in the coefficients $D_i(\chi)$ and the auxiliary input step further includes a step where the CPU inputs a value of $m(\chi)$ which satisfies $r(\chi)|m(\chi)$ and stores the value in the memory means. The computation method for scalar multiplication further includes:

a second auxiliary specifying step where the CPU, letting coefficient of $\chi^{dmax}$ which are terms having maximum degree dmax of $\deg(D_i(\chi))$ be $T_{dmax}(\phi_q)$, reads out coefficient $D_i(\chi)$ from the memory means, allocates $T(\phi_q,\chi)$ and $U(\chi_q,\chi)$ with initial values of 0 in the memory means, performs , when $\deg(D_i(\chi))$ =dmax holds true, an assignment operation represented by $T(\phi_q,\chi) \leftarrow T(\phi_q,\chi)+D_i(\chi)\phi_q^i$, and when otherwise, an assignment operation represented by $U(\phi_q,\chi)\leftarrow U(\phi_q,\chi)+D_i(\chi)\phi_q^i$ repeatedly from i=0 to i<$\lceil \deg r(\chi)/\deg s(\chi)\rfloor$, stores the values of $T(\phi_q,\chi)$ and $U(\phi_q,\chi)$ in the memory means and specifies a maximum degree coefficient $T_{dmax}(\phi_q)$;
a third auxiliary specifying step where the CPU reads out the values of $m(\chi)$ and $R(\chi)$ from the memory means, using the minimum degree polynomial $m(\chi)$ which satisfies $r(\chi)|m(\chi)$, specifies $V(\phi_q)$ which satisfies

$$V(\phi_q)|m(\phi_q),\ \gcd(T_{dmax}(\phi_q),V(\phi_q))=1$$

by performing assignment operations represented by $W(\phi_q)\leftarrow \gcd(T_{dmax}(\phi_q), m(\phi_q))$ and $V(\phi_q)\leftarrow W(\phi_q)$, and stores the value of said $V(\phi_q)$ in the memory means;
a fourth auxiliary specifying step where the CPU reads out the values of $V(\phi_q)$ and $m(\phi_q)$ from the memory means, specifies integer scalar v and $g(\phi_q)$ which satisfies

$$g(\phi_q)V(\phi_q)\equiv v(\bmod\ m(\phi_q))$$

by performing an extended Euclidian algorithm and stores the values of scalar v and $g(\phi_q)$ in the memory means;
a fifth auxiliary specifying step where, in place of the auxiliary specifying step, the CPU reads out each value of $T_{amax}(\phi_q)$, $\chi^{dmax}$, $D_i(\chi)$ and Q from the memory means, using a polynomial $f(\phi_q,\chi)$ which satisfies

$$[T_{dmax}(\phi_q)\chi^{dmax}]Q=\Sigma\ \phi_q^i([D_i(\chi)]Q)-[T_{dmax}(\phi_q)\chi^{dmax}]Q$$
$$=[f(\phi_q,\chi)]Q$$

and said $g(\phi_q)$, based on $\phi_q^kQ=Q$, specifies a polynomial $h(\phi q,\chi)$ which satisfies

$$[v\chi^{dmax}]Q=[g(\phi_q)f(\phi_q,\chi)]Q=[h(\phi_q,\chi)]Q\ ,$$

, and stores the value of the polynomial $h(\phi_q,\chi)$ in the memory means; and
a step where the CPU reads out the value of said $h(\phi_q,\chi)$ from the memory means, using a constant term $h(0,\chi)$ of $h(\phi q,\chi)$ with respect to $\phi_q$ which satisfies

$$[v\chi^{dmax}-h(0,\chi)]Q=[h(\phi_q,\chi)-h(0,\chi)]Q,$$

performs, letting $\chi=a$, assignment operations represented by $s'=va^{dmax}-h(0,a)$ and $h'(\phi_q)=h(\phi_q,a)-h(0,a)$, stores the value of s' and $h'(\phi_q)$ in the memory means, performs $(va^{dmax}-h(0,a))$ -adic expansion of said n which has been performed (t-1)-adic expansion instead of performing $D_{dmax}(a)$-adic expansion, and uses $h(\phi_q,a)-h(0,a)$ in place of

$va^{dmax}$-h(0,a).

According to a fourth aspect of the present invention, there is provided a computation method for exponentiation, in which, letting:

$F_q^k$ be a k-th extension field of a finite field $F_q$ of an order q;
H be a multiplicative subgroup of $F_q^k$ of a prime order r; and
$\phi_q$ be a Frobenius endomorphism of an element with respect to the finite field $F_q$,
an electronic computer including a CPU and a memory means computes exponentiation of an element A in H to the power of n with respect to a non-negative integer n.

The computation method for exponentiation includes:
an input step where the CPU inputs a value of the non-negative integer n, a value of the order q, a value of the prime order r of said $F_q^k$, and a value of the element A represented by $A \in H \in F_q^k$ and stores the values in the memory means;
an initialization step where the CPU initializes the memory means which stores a computation result Z;
a first computation step where the CPU reads out the values of the order q and the element A from the memory means, letting difference of said q and r be s=q-r, performs assignment operations represented by $T[j] \leftarrow A$ and $A \leftarrow A*A$ repeatedly from j=0 to $j < \lceil \log_2 S \rfloor$, and stores the values of said T[j] and said A in the memory means;
an expansion step where the CPU reads out the values of said n and the difference s from the memory means, based on the following formula
which is expanded using the difference s,

[F5]

$$n = \sum_i c[i]s^i, \ 0 \le c[i] \le s$$

performs assignment operations represented by $c[i] \leftarrow n\%s$ and $n \leftarrow (n-c[i])/s$ repeatedly from i=0 predetermined times, and stores the values of each coefficient c[i] and the non-negative integer n in the memory means;
a second computation step where the CPU reads out the values of c[i] and said n from the memory means, based on $A[i]=A^{c[i]}$, initializes A[i]=1, when c[i] &1 holds true, performs assignment operations represented by $A[i] \leftarrow A[i]*T[j]$ and $c[i] \leftarrow c[i]/2$ repeatedly from i=0 predetermined times, and stores values of A[i] and c[i] in the memory means; and
a composition step where the CPU reads out each A[i] from the memory means, based on the following formula

[F6]

$$A^n = \prod_i \phi_q^i (A[i]),$$

performs an exponentiation operation represented by $Z \leftarrow Z*\phi_q^i A[i])$ repeatedly from i=0 predetermined times, and stores the computation result as Z in the memory means.
According to a fifth aspect of the present invention, there is provided a computation method for exponentiation, wherein, letting $X^{\{Y\}}$ denote $X^Y$, the order q, the prime order r, and said s are given respectively as $q(\chi)$, $r(\chi)$, and $s(\chi)$ using an integer variable $\chi$. The computation method for exponentiation further includes:
an auxiliary input step where the CPU inputs each value of said $q(\chi)$, $r(\chi)$, and $s(\chi)$ and stores the values in the memory means;
an auxiliary expansion step where the CPU reads out the values of $r(\chi)$ and s(x)from the memory means, based on the following formula in which $s(\chi)$-adic expansion of said $r(\chi)$ is performed using said $s(\chi)$

[F7]

$$r(\chi) = \sum_{i=0}^{\lceil \deg r(\chi)/\deg s(\chi) \rceil} D_i(\chi)s(\chi)^i, \ 0 \le \deg(D_i(\chi)) < deg(s(\chi))$$

performs assignment operations represented by $D_i(\chi) \leftarrow r(\chi)\%s(\chi)$ and $r(\chi) \leftarrow (r(\chi)-D_i(\chi))/s(\chi)$ repeatedly from $i=0$ to $i<\lceil degr(\chi)/degs(\chi)\rfloor$, and stores the values of the coefficient $D_i(\chi)$ and said r(x) in the memory means;

an auxiliary extraction step where the CPU extracts $D_i(\chi)$ having the maximum $deg(D_i(\chi))$ among the stored coefficients $D_i(\chi)$ as $D_{dmax}(\chi)$ and stores the $D_{dmax}(\chi)$ in the memory means;

an auxiliary specifying step where the CPU reads out the values of said $D_{dmax}(\chi)$, $D_i(\chi)$, and q, using a polynomial f (q, $\chi$) which satisfies

$$(A^{D_{dmax}(\chi)})^{q^{dmax}} = A^{\sum_{i \neq dmax} -D_i(\chi)q^i} = A^{f(q,\chi)},$$

based on $\phi_q^k(A)=A$,
specifies a polynomial h(q,$\chi$) which satisfies

$$A^{D_{dmax}(\chi)} = A^{\sum_{i \neq dmax} -D_i(\chi)q^i - q^{dmax}} = A^{h(q,\chi)},$$

, and stores the value of the polynomial h(q,$\chi$) in the memory means; and

a step where the CPU , letting $\chi=a$, replaces s-adic expansion of said n with $D_{dmax}(a)$-adic expansion with $s=D_{dmax}(a)$ and uses the polynomial $h(\phi_q,a)$ in place of said $D_{dmax}(a)$.

According to a sixth aspect of the present invention, there is provided a computation method for exponentiation, wherein, there exist a plurality of coefficients $D_i(\chi)$ having the maximum degree dmax in the coefficients $D_i(\chi)$, and the auxiliary storage step further includes a step where the CPU inputs a value of m($\chi$) which satisfies $r(\chi)|m(\chi)$ and stores the value in the memory means. The computation method for exponentiation further includes:

a second auxiliary specifying step where the CPU, letting coefficients of $\chi^{dmax}$ which are terms having the maximum degree dmax of deg ($D_i(\chi)$) be $T_{dmax}(q)$, reads out coefficient $D_i(\chi)$ from the memory means, allocates T(q,x) and U(q, $\chi$) with initial values of 0 in the memory means, performs , when $deg(D_i(\chi))=dmax$ holds true, an assignment operation represented by $T(q,\chi) \leftarrow T(q,\chi)+D_i(\chi)q^i$, and when otherwise, an assignment operation represented by $U(q,\chi) \leftarrow U(q,\chi)+D_i(\chi)q^i$ repeatedly from $i=0$ to $i<\lceil degr(\chi)/degs(\chi)\rfloor$, stores the values of T(q,$\chi$) and U(q, $\chi$) in the memory means and specifies a maximum degree coefficient $T_{dmax}(q)$;

a third auxiliary specifying step where the CPU reads out the values of m(x) and R($\chi$) from the memory means, using a minimum degree polynomial m($\chi$) which satisfies $r(\chi)|m(\chi)$, specifies V(q) which satisfies

$$V(q)|m(q), \quad gcd(T_{dmax}(q),V(q))=1$$

by performing assignment operations represented by $W(q) \leftarrow gcd(T_{dmax}(q), m(q))$ and $V(q) \leftarrow W(q)$, and stores the value of said V(q) in the memory means;

a fourth auxiliary specifying step where the CPU reads out the values of V (q) and m(q) from the memory means, specifies an integer scalar v and g(q) which satisfy

$$g(q)V(q) \equiv v(mod \ m(q))$$

by performing an extended Euclidian algorithm, and stores the values of the scalar v and g(q) in the memory means;

a fifth auxiliary specifying step where, in place of the auxiliary specifying step, the CPU reads out each value of $T_{dmax}$(q), $\chi^{dmax}$, $D_i(\chi)$, using a polynomial f(q,$\chi$) which satisfies

$$A^{T_{dmax}(q)\chi^{dmax}} = A^{\sum D_i(\chi)q^i - T_{dmax}(q)\chi^{dmax}}$$

$$= A^{f(q,\chi)}$$

and said g(q), based on $\phi_q^k(A)=A$, specifies a polynomial h(q, $\chi$) which satisfies

$$A^{\{v \chi^{dmax}\}} = A^{\{g(q)f(q, \chi)\}} = A^{\{h(q, \chi)\}}$$

, and stores the value of the polynomial $h(q,\chi)$ in the memory means; and
a step where the CPU reads out the value of $h(q, \chi)$ from the memory means, using a constant term $h(0, \chi)$ of $h(q, \chi)$ with respect to q which satisfies

$$A^{\{v \chi^{dmax} - h(0, \chi)\}} = A^{\{h(q, \chi) - h(0, \chi)\}}$$

performs, letting $\chi = a$, assignment operations represented by $s' = va^{dmax} - h(0,a)$ and $h'(q) = h(q,a) - h(0,a)$, stores values of $s'$ and $h'(q)$ in the memory means, performs $(va^{dmax} - h(0,a))$-adic expansion of said n which has been performed s-adic expansion instead of performing $D_{dmax}(a)$-adic expansion and uses $h(q,a) - h(0,a)$ in place of $va^{dmax} - h(0,a)$.

According to a seventh aspect of the present invention, there is provided a computer readable recording medium recording a scalar multiplication program, in which an elliptic curve is assumed to be $E/F_q = x^3 + ax + b - y^2 = 0$, $a \in_q$, $b \in F_q$, letting:

E ($F_q$) be an additive group constituted of rational points on the elliptic curve defined over a finite field $F_q$;
E ($F_q^k$) be an additive group constituted of rational points on the elliptic curve defined over an extension field $F_q^k$ of the finite field $F_q$;
$\phi_q$ be a Frobenius endomorphism of a rational point with respect to the finite field $F_q$;
t be a trace of the Frobenius endomorphism $\phi_q$; r be a prime order which divides an order of $E(F_q)$, $\#E(F_q) = q + 1 - t$;
E[r] be a set of rational points having an order of the prime number r;
[j] be a mapping which multiplies a rational point by j; and
G be a set of rational points in $E(F_q^k)$ which satisfy

$$G = E[r] \cap Ker(\phi_q - [q]),$$

an electronic computer including a CPU and a memory means is caused to perform a scalar multiplication by n of a rational point Q in G with respect to a non-negative integer n. The scalar multiplication program causes the electronic computer to perform:
an input procedure where the electronic computer inputs a value of the non-negative integer n, a value of the trace t, and a rational point Q represented by $Q \in G \subset E(F_q^k)$ and stores the values in the memory means;
an initialization procedure where the electronic computer initializes the memory means which stores a computation result Z;
an expansion procedure where, since

$$\phi_q(Q) = [q]Q = [t-1]Q$$

holds true with respect to a rational point Q in G, letting $s = t-1$, based on the following formula in which s-adic expansion of said n is performed,

[F8]

$$n = \sum_i c[i]s^i, \ 0 \leq c[i] \leq s$$

the electronic computer performs assignment operations represented by $c[i] \leftarrow n\%s$ and $n \leftarrow (n-c[i]/s$ repeatedly from i=0 predetermined times and stores the values of each coefficient c[i] and the non-negative integer n in the memory means;
a computation procedure where the electronic computer reads out the rational point Q, the non-negative integer n, and the coefficient c[i] from the memory means and performs an assignment operation represented by Q[i]=c[i]Q repeatedly from i=0 predetermined times and stores the values of each Q[i] in the memory means; and
a composition procedure where, based on the following formula of scalar multiplication nQ represented by using the Frobenius endomorphism $\phi_q$ with respect to a rational point in place of t-1,

[F9]

$$nQ = \sum_i \phi_q{}^i(Q[i])$$

the electronic computer reads out Q[i] and the computation result Z from the memory means and performs an assignment operation represented by $Z \leftarrow Z + \phi_q{}^i(Q[i])$ repeatedly from i=0 predetermined times and stores the computation result Z of the scalar multiplication in the memory means.

According to a eighth aspect of the present invention, there is provided a computer readable recording medium recording a scalar multiplication program, wherein the order q of the finite field $F_q$ of the elliptic curve, the prime order r which divides #E($F_q$), and the trace t of the Frobenius endomorphism $\phi_q$ are given respectively as q($\chi$), r($\chi$), and t($\chi$) using an integer variable x. The scalar multiplication program causes the electronic computer to perform:

an auxiliary input procedure where the electronic computer inputs each value of the q($\chi$), r($\chi$), and t($\chi$) and stores the values in the memory means;
an auxiliary expansion procedure where the electronic computer reads out the values of the r(x) and t($\chi$) from the memory means and, letting said s($\chi$)=t($\chi$)-1, based on the following formula in which s($\chi$)-adic expansion of r($\chi$) is performed,

[F10]

$$r(\chi) = \sum_{i=0}^{\lceil \deg r(\chi)/\deg s(\chi) \rceil} D_i(\chi)s(\chi)^i, \ \ 0 \leq \deg(D_i(\chi)) < deg\left(s(\chi)\right)$$

performs assignment operations represented by $D_i(\chi) \leftarrow r(\chi)\%s(\chi)$ and $r(\chi) \leftarrow (r(\chi)-D_i(\chi))/s(\chi)$ repeatedly from i=0 to i<$\lceil$degr($\chi$)/degs($\chi$)$\rfloor$ and stores the values of each coefficient $D_i(\chi)$ and r($\chi$) in the memory means;
an auxiliary extraction procedure where the electronic computer extracts $D_i(\chi)$ having the maximum deg($D_i(\chi)$) among the stored coefficients $D_i(\chi)$ as $D_{dmax}(\chi)$ and stores said $D_{dmax}(\chi)$ in the memory means;
an auxiliary specifying procedure where the electronic computer reads out the values of $D_{dmax}(\chi)$, $D_i(\chi)$, and Q, using a polynomial f($\phi_q$,$\chi$) which satisfies

$$\phi_q{}^{dmax}([D_{dmax}(\chi)]Q) = \sum \phi_q{}^i([D_i(\chi)]Q) - \phi_q{}^{dmax}([D_{dmax}(\chi)]Q)$$

$$= [f(\phi_q, \chi)]Q \quad ,$$

based on $\phi_q{}^kQ=Q$, specifies a polynomial h($\phi_q$,$\chi$)which satisfies

$$[D_{dmax}(\chi)]Q = [f(\phi_q, \chi)\phi_q{}^{-dmax}]Q = h(\phi_q, \chi)]Q$$

and stores the value of the polynomial h($\phi_q$,$\chi$) in the memory means; and
a procedure where the electronic computer , letting $\chi$ =a, replaces the s-adic expansion with $D_{dmax}$(a)-adic expansion with s=$D_{dmax}$(a) and uses the polynomial h($\phi_q$,a) in place of said $D_{dmax}$(a).

According to a ninth aspect of the present invention, there is provided a computer readable recording medium recording a scalar multiplication program, wherein there exist a plurality of coefficients $D_i(\chi)$ having the maximum degree dmax in the coefficients $D_i(\chi)$, and the auxiliary input procedure further includes a procedure where the electronic computer inputs a value of $m(\chi)$ which satisfies $r(\chi)|m(\chi)$ and stores the value in the memory means. The scalar multiplication program causes the electronic computer to perform:

a second auxiliary specifying procedure where the electronic computer, letting coefficient of $\chi^{dmax}$ which are terms having maximum degree dmax of $deg(D_i(\chi))$ be $T_{dmax}(\phi_q)$, reads out the values of coefficient $D_i(\chi)$ from the memory means, allocates $T(\phi_q,\chi)$ and $U(\phi_q,\chi)$ with initial values of 0 in the memory means, performs an assignment operation, when $deg(D_i(\chi))=dmax$ holds true, represented by $T(\phi_q,\chi)\leftarrow T(\phi_q, \chi)+D_i(\chi)\phi_q^i$ and when otherwise, represented by $U(\phi_q,\chi)\leftarrow U(\phi_q,\chi)+D_i(\chi)\phi_q^i$ repeatedly from i=0 to i<⌈degr(χ)/degs(χ)⌋, stores the values of $T(\phi_q,\chi)$ and $U(\chi_q,\chi)$ in the memory means and specifies the maximum degree coefficient $T_{dmax}(\phi_q)$;

a third auxiliary specifying procedure where the electronic computer reads out the values of $m(\chi)$ and $r(\chi)$ from the memory means, using the minimum degree polynomial m(x) which satisfies $r(\chi)|m(\chi)$, specifies $V(\phi_q)$ which satisfies

$$\mathrm{V}(\phi_q)\,|\,\mathrm{m}(\phi_q)\,, \quad \mathrm{gcd}(\mathrm{T}_{dmax}(\phi_q),\mathrm{V}(\phi_q))=1$$

by performing assignment operations represented by $W(\phi_q)\leftarrow gcd(T_{dma}(\phi_q),m(\phi_q))$ and $V(\phi_q)\leftarrow W(\phi_q)$, and stores the value of said $V(\phi_q)$ in the memory means;

a fourth auxiliary specifying procedure where the electronic computer reads out the values of $V(\phi_q)$ and $m(\phi_q)$, specifies an integer scalar v and $g(\phi_q)$ which satisfy

$$\mathrm{g}(\phi_q)\mathrm{V}(\phi_q)\equiv\mathrm{v}(\bmod\ \mathrm{m}(\phi_q))$$

by performing an extended Euclidian algorithm and stores the values of scalar v and $g(\phi_q)$ in the memory means;

a fifth auxiliary specifying procedure where, in place of the auxiliary specifying step, the electronic computer reads out each value of $T_{dmax}(\phi_q)$, $\chi^{dmax}$, $D_i(\chi)$ and Q, using a polynomial $f(\phi_q,\chi)$ which satisfies

$$[\mathrm{T}_{dmax}(\phi_q)\,\chi^{dmax}]\mathrm{Q}=\Sigma\,\phi_q^i([\mathrm{D}_i(\chi)]\mathrm{Q})-[\mathrm{T}_{dmax}(\phi_q)\,\chi^{dmax}]\mathrm{Q}$$

$$=[\mathrm{f}(\phi_q,\chi)]\mathrm{Q}$$

and said $g(\phi_q)$, based on $\phi_q^k Q=Q$, specifies a polynomial $h(\phi_q,\chi)$ which satisfies

$$[\mathrm{v}\,\chi^{dmax}]\mathrm{Q}=[\mathrm{g}(\phi_q)\mathrm{f}(\phi_q,\chi)]\mathrm{Q}=[\mathrm{h}(\phi_q,\chi)]\mathrm{Q}\ ,$$

, and stores the value of the polynomial $h(\phi_q,\chi)$ in the memory means; and

a procedure where the electronic computer reads out the value of said $h(\phi_q,\chi)$ from the memory means, using a constant term $h(0,\chi)$ of $h(\phi_q,\chi)$ with respect to $\phi_q$ which satisfies

$$[\mathrm{v}\,\chi^{dmax}-\mathrm{h}(0,\chi)]\mathrm{Q}=[\mathrm{h}(\phi_q,\chi)-\mathrm{h}(0,\chi)]\mathrm{Q},$$

performs, letting χ=a, assignment operations represented by $s'=va^{dmax}-h(0,a)$ and $h'(\phi_q)=h(\phi_q,a)-h(0,a)$, stores the values of s' and $h'(\phi_q)$ in the memory means, performs $(va^{dmax}-h(0,a))$-adic expansion of said n which has been performed (t-1)-adic expansion instead of performing $D_{dmax}(a)$-adic expansion, and uses $h(\phi_q,a)-h(0,a)$ in place of $va^{dmax}-h(0,a)$.

According to a tenth aspect of the present invention, there is provided a computer readable recording medium recording an exponentiation program, in which, letting:

$F_q{}^k$ be a k-th extension field of a finite field $F_q$ of an order q;
H be a multiplicative subgroup of $F_q{}^k$ of a prime order r; and
$\phi_q$ be a Frobenius endomorphism of an element with respect to the finite field $F_q$,
an electronic computer including a CPU and a memory means is caused to perform exponentiation of an element A in H to the power of n with respect to a non-negative integer n.

The exponentiation program causes the electronic computer to perform:

an input procedure where the electronic computer inputs a value of the non-negative integer n, a value of the order q, a value of the prime order r of said $F_q{}^k$, and a value of an element A represented by $A \in H \subset F_q{}^k$ and stores the values in the memory means;
an initialization procedure where the electronic computer initializes the memory means which stores a computation result Z;
a first computation procedure where the electronic computer reads out the values of the order q and the element A from the memory means, letting difference of said q and r be s=q-r, performs assignment operations represented by $T[j] \leftarrow A$ and $A \leftarrow A*A$ repeatedly from j=0 to $j < \lceil \log_2 S \rceil$, and stores the values of said T[j] and said A in the memory means;
an expansion procedure where the electronic computer reads out the values of said n and the difference s, based on the following formula which is expanded using difference s,

[F11]

$$ n = \sum_i c[i]s^i ,\ 0 \le c[i] \le s $$

performs assignment operations represented by $c[i] \leftarrow n\%s$ and $n \leftarrow (n-c[i])/s$ repeatedly from i=0 predetermined times, and stores the values of each coefficient c[i] and the non-negative integer n in the memory means;
a second computation procedure where the electronic computer reads out the values of c[i] and said n, based on $A[i]=A^{c[i]}$, initializes A[i]=1, when c[i]&1 holds true, performs assignment operations represented by $A[i] \leftarrow A[i]*T[j]$ and $c[i] \leftarrow c[i]/2$ repeatedly from i=0 predetermined times, and stores the values of A[i] and c[i] in the memory means; and
a composition procedure where the electronic computer reads out the values of each A[i] from the memory means, based on the following formula,

[F12]

$$ A^n = \prod_i \ \phi_q{}^i (A[i]) $$

performs an assignment operation represented by $Z \leftarrow Z*\phi_q{}^i(A[i])$ repeatedly from i=0 predetermined times, and stores the computation result as Z in the memory means.

According to a eleventh aspect of the present invention, there is provided a computer readable recording medium recording an exponentiation program, wherein, letting $X^{\{Y\}}$ denote $X^Y$, the order q, the prime order r, and said s are given respectively as $q(\chi)$, $r(\chi)$, and $s(\chi)$ using an integer variable $\chi$.
The exponentiation program causes the electronic computer to further perform:

an auxiliary input procedure where the electronic computer inputs each value of said $q(\chi)$, $r(\chi)$, and $s(\chi)$ and stores the values in the memory means;
an auxiliary expansion procedure where the electronic computer reads out the values of $r(\chi)$ and $s(\chi)$, based on the following formula in which s $(\chi)$-adic expansion of said $r(\chi)$ is performed using said $s(\chi)$,

[F13]

$$r(\chi) = \sum_{i=0}^{\lceil \deg r(\chi)/\deg s(\chi) \rceil} D_i(\chi) s(\chi)^i, \ 0 \le \deg(D_i(\chi)) < deg\left(s(\chi)\right)$$

performs assignment operations represented by $D_i(\chi) \leftarrow r(\chi) \% s(\chi)$ and $r(\chi) \leftarrow (r(\chi) - D_i(\chi))/s(\chi)$ repeatedly from i=0 to $i < \lceil \deg r(\chi)/\deg s(\chi) \rceil$, and stores the values of the coefficient $D_i(\chi)$ and said r(x) in the memory means;
an auxiliary extraction procedure where the electronic computer extracts $D_i(\chi)$ having the maximum $\deg(D_i(\chi))$ among the stored coefficients $D_i(\chi)$ as $D_{dmax}(\chi)$ and stores said $D_{dmax}(\chi)$ in the memory means;
an auxiliary specifying procedure where the electronic computer reads out the values of said $D_{dmax}(\chi)$, $D_i(\chi)$, and q, using a polynomial $f(q,\chi)$ which satisfies

$$(A^{\{D_{dmax}(\chi)\}})^{\{q^{dmax}\}} = A^{\{\sum_{i \ne dmax} -D_i(\chi)q^i\}} = A^{\{f(q,\chi)\}},$$

based on $\phi_q{}^k(A)=A$,
specifies a polynomial $h(q,\chi)$ which satisfies

$$A^{\{D_{dmax}(\chi)\}} = A^{\{\sum_{i \ne dmax} -D_i(\chi)q^i - q^{dmax}\}} = A^{\{h(q,\chi)\}}$$

, and stores the value of the polynomial $h(q,\chi)$ in the memory means; and
a procedure where the electronic computer , letting $\chi$ =a, replaces s-adic expansion of said n with $D_{dmax}(a)$-adic expansion with $s=D_{dmax}(a)$ and uses the polynomial $h(\phi_q,a)$ in place of said $D_{dmax}(a)$.

According to a twelfth aspect of the present invention, there is provided a computer readable recording medium recording an exponentiation program, wherein there exist a plurality of coefficients $D_i(\chi)$ having the maximum degree dmax in the coefficients $D_i(\chi)$, and the auxiliary input procedure further includes a procedure where the electronic computer inputs a value of $m(\chi)$ which satisfies $r(\chi)|m(\chi)$ and stores the value in the memory means.
The exponentiation program causes the electronic computer to further perform:

a second auxiliary specifying procedure where the electronic computer, letting coefficients of $\chi^{dmax}$ which are terms having the maximum degree dmax of $\deg(D_i(\chi))$ be $T_{dmax}(q)$, reads out coefficient $D_i(\chi)$ from the memory means, allocates $T(q,\chi)$ and $U(q,\chi)$ with initial values of 0 in the memory means, performs an assignment operation, when $\deg(D_i(\chi))=dmax$ holds true, represented by $T(q,\chi) \leftarrow T(q,\chi)+D_i((\chi)q^i$ and when otherwise, represented by $U(q, \chi) \leftarrow U(q, \chi)+D_i(\chi)q^i$ repeatedly from i=0 to $i < \lceil \deg r(\chi)/\deg s(\chi) \rceil$, stores the values of $T(q,\chi)$ and $U(q, \chi)$ in the memory means and specifies a maximum degree coefficient $T_{dmax}(q)$;
a third auxiliary specifying procedure where the electronic computer reads out the values of $m(\chi)$ and $r(\chi)$ from the memory means, using a minimum degree polynomial $m(\chi)$ which satisfies $r(\chi)|m(\chi)$, specifies V(q) which satisfies

$$V(q)|m(q), \ \gcd(T_{dmax}(q),V(q))=1$$

by performing assignment operations represented by $W(q) \leftarrow \gcd(T_{dmax}(q) \ m(q))$ and $V(q) \leftarrow W(q)$, and stores the value of said V(q) in the memory means;
a fourth auxiliary specifying procedure where the electronic computer reads out the values of V(q) and m(q), specifies an integer scalar v and $g(\phi_q)$ which satisfy

$$g(q)V(q) \equiv v(mod \ m(q))$$

by performing an extended Euclidian algorithm, and stores the values of the scalar v and g(q) in the memory means;
a fifth auxiliary specifying procedure where, in place of the auxiliary specifying step, the electronic computer reads out each value of $T_{dmax}(q)$, $\chi^{dmax}$, $D_i(\chi)$, and Q, using a polynomial $f(q,\chi)$ which satisfies

$$A\hat{}\{T_{dmax}(q)\chi^{dmax}\}=A\hat{}\{\Sigma D_i(\chi)q^i-T_{dmax}(q)\chi^{dmax})$$

$$=A\hat{}\{f(q,\chi)\}$$

and said g(q), based on $\phi_q^k(A)=A$, specifies a polynomial $h(q,\chi)$ which satisfies

$$A\hat{}\{v\chi^{dmax}\}=A\hat{}\{g(q)f(q,\chi)\}=A\hat{}\{h(q,\chi)\}\ ,$$

, and stores the value of the polynomial $h(q,\chi)$ in the memory means; and
a procedure where the electronic computer reads out the value of said $h(q,\chi)$ from the memory means, using a constant term $h(0,\chi)$ of $h(q,\chi)$ with respect to q satisfies

$$A\hat{}\{v\chi^{dmax}-h(0,\chi)\}=A\hat{}\{h(q,\chi)-h(0,\chi)\}$$

performs, letting $\chi=a$, assignment operations represented by s'=$va^{dmax}$-h(0,a) and h'(q)=h(q,a)-h(0,a), stores the values of s' and h' (q) in the memory means, performs ($va^{dmax}$-h(0,a))-adic expansion of said n which is performed s-adic expansion instead of performing $D_{dmax}(a)$-adic expansion and uses h (q, a) -h (0, a) in place of $va^{dmax}$-h(0,a).

The present invention reduces the number of operations using a Frobenius endomorphism $\phi_q$. In particular, in the case of scalar multiplication, with respect to a rational point Q in G,

$$\phi_q(Q)=[q]Q=[t-1]Q$$

holds true, or in the case of exponentiation, letting a difference of q and r be s=q-r, with respect to a non-zero element A in H,

$$\phi_q(A)=A^q=A^s$$

holds true. Accordingly, the invention performs (t-1)-adic expansion of a scalar n or performs s-adic expansion of an exponent n and by using the Frobenius endomorphism $\phi_q$ with respect to a rational point, in place of t-1 or by using the Frobenius endomorphism $\phi_q$ with respect to an element, in place of s, makes it possible to reduce the number of operations even when scalar n in scalar multiplication or exponent n in exponentiation does not exceed greatly an order q, thus improving a computation speed.

In particular, in ID-based cryptography and group signature which are pairing based, an elliptic curve which can use pairing called pairing friendly curve is used. When this pairing friendly curve is used, using an integer variable $\chi$, order $q(\chi)$, prime order $r(\chi)$ which divides $\#E(F_q)$, trace $t(\chi)$ of the Frobenius endomorphism $\phi_q$ are given in advance. In the case of scalar multiplication, $r(\chi)$ is performed $(t(\chi)-1)$-adic expansion and coefficient $D_i(\chi)$ having maximum degree among coefficients $D_i(\chi)$ introduced at the time of this $(t(\chi)-1)$ -adic expansion, is set to $D_{dmax}(\chi)$ and by replacing this $Dd_{max}(\chi)$ with a polynomial $h(\phi_q,\chi)$, the number of operations is further reduced. In the case of exponentiation, $r(\chi)$ is performed $(s(\chi)=q(\chi)-r(\chi))$-adic expansion and coefficient $D_i(\chi)$ having maximum degree among coefficients $D_i(\chi)$ introduced at the time of this $s(\chi)$-adic expansion is set to $D_{dmax}(\chi)$ and by replacing this $D_{dmax}(\chi)$ with a polynomial $h(\phi_q,\chi)$, the number of operations is further reduced. Accordingly it is possible to improve the computation speeds respectively.

Furthermore, in the case where there exist a plurality of $D_i(\chi)$ having a maximum degree dmax, by using a minimum degree polynomial $m(\chi)$ which satisfies $r(\chi)|m(\chi)$, V(q) which satisfies

$$V(q) | m(q), \quad gcd(T_{dmax}(q), V(q)) = 1$$

is specified. And also an integer scalar v which satisfies $g(q)V(q) \equiv v(mod\ m(q))$ is used. In the case of scalar multiplication, by performing $(v\chi^{dmax}-h(0,\chi))$-adic expansion of scalar n which has been performed (t-1)adic expansion, in stead of performing $D_{dmax}(\chi)$ -adic expansion, and by using $h(q, \chi)-h(0,\chi)$, in place of $v_\chi^{dmax}-h(0,\chi)$, the number of operations is further reduced. And in the case of exponentiation, by performing $(v\chi^{dmax}-h(0,\chi))$-adic expansion of exponent n which has been performed s-adic expansion, in stead of performing $D_{dmax}(\chi)$ -adic expansion, and by using $h(q,\chi)-h(0,\chi)$, in place of $v\chi^{dmax}-h(0,\chi)$, the number of operations is further reduced. Accordingly, it is possible to improve the computation speeds respectively.

BRIEF DESCRYPTION OF THE DRAWINGS

Fig.1 is a explanatory view of an electronic computer which includes a scalar multiplication program and an exponentiation program;
Fig.2 is a flowchart of the scalar multiplication program;
Fig.3 is a flowchart of the scalar multiplication program;
Fig.4 is a flowchart of an auxiliary program which obtains $D_{dmax}(\chi)$ and a polynomial $h(\phi_q,\chi)$;
Fig.5 is a flowchart of the scalar multiplication program;
Fig.6 is a flowchart of an auxiliary program which obtains a polynomial $h(\phi_q,\chi)$ and $v\chi^{dmax}-h(0,\chi)$;
Fig.7 is a flowchart of the exponentiation program;
Fig.8 is a flowchart of the exponentiation program;
Fig.9 is a flowchart of an auxiliary program which obtains $D_{dmax}(\chi)$ and a polynomial $h(q,\chi)$;
Fig.10 is a flowchart of the exponentiation program; and
Fig.11 is a flowchart of an auxiliary program which obtains a polynomial $h(q, \chi)$ and $v \chi^{dmax}-h(0, \chi)$.

EXPLANATION OF SYMBOLS

10    electronic computer
11    CPU
12    storage device
13    memory device
14    bus
15    input/output control part
20    telecommunication lines
30    client device

DESCRIPTION OF THE PREFERRED EMBODIMENTS

The present invention has an objective to speed up computations of scalar multiplication and exponentiation. Although the computations per se differ in scalar multiplication and exponentiation, the techniques to speed up are the same and the number of operations are respectively reduced in the same way, thus enabling to speed up the computations. Firstly, scalar multiplication is explained and next, exponentiation is explained.

Firstly, an elliptic curve is assumed to be

$$E/F_q = x^3 + ax + b - y^2 = 0, \quad a \in F_q, \quad b \in F_q$$

and following symbols are defined as follows.
$E(F_q)$: an additive group consisted of rational points on the elliptic curve defined over a finite field $F_q$;
$E(F_q^k)$: an additive group consisted of rational points on the elliptic curve defined over an extension field $F_q^k$ of the finite field $F_q$;

$\phi_q$: a Frobenius endomorphism of a rational point with respect to the finite field $F_q$;

t: a trace of the Frobenius endomorphism $\phi_q$;

r: a prime order which divides an order of $E(F_q)$, $\#E(F_q)=q+1-t$;

E [r] : a set of rational points which have the prime order r;

[j]: a mapping which multiplies a rational point by j;

and

G: a set of rational points contained in $E(F_q{}^k)$ which satisfy $G=E[r] \cap ker(\phi_q-[q])$.

And, the scalar multiplication of a rational point Q with respect to a non-negative integer n, that is, nQ is computed. In addition, the scalar multiplication assumed in the embodiment is performed when computing a pairing and hence, generally scalar n does not exceed order r greatly.

Further, since r=q+1-t, $0\equiv q+1-t(mod\ r)$ holds true.

Here, since scalar n does not exceed order r greatly, scalar n is represented by (t-1)-adic expansion as

$$n=C_1(t-1)+C_0,$$

or

$$n=(t-1)^2+C_1(t-1)+C_0.$$

Since $\phi_q(Q)=[q]Q=[t-1]Q$ holds true, in the case of $n=C_1(t_{-1})+C_0$, nQ becomes as follows.

$$nQ=[C_1(t-1)+C_0]Q$$

$$=[C_1q]Q+[C_0]Q$$

$$=\phi_q([C_1]Q)+[C_0]Q.$$

Further, in the case of $n=(t-1)^2+C_1(t-1)+C_0$, nQ becomes as follows.

$$nQ=[(t-1)^2+C_1(t-1)+C_0]Q$$

$$=[q][q]Q+[C_1q]Q+[C_0]Q$$

$$=\phi_q(\phi_q(Q))+\phi_q([C_1]Q)+[C_0]Q.$$

Here, $C_1$ and $C_0$ are nearly equal to or less than t-1 and also it is possible to use the Frobenius endomorphism with respect to a rational point thus enabling to reduce the number of operations. Accordingly, it is possible to speed up computation of scalar multiplication.

Further, usually, in computing a pairing, a known pairing friendly curve is used. In particular, using integer variable $\chi$, order $q(\chi)$, prime order $r(\chi)$ which divides $\#E(F_q)$, trace $t(\chi)$ of the Frobenius endomorphism $\phi_q$ are mostly given in advance.

Here, considering that $[r]Q=[q+1-t]Q=O$ holds true, r(x)is divided by $t(\chi)-1$ to get a remainder. That is, $r(\chi)$ is represented by

$$[r(\chi)]Q=\Sigma[D_i(\chi)(t(\chi)-1)^i]Q=\Sigma\phi_q{}^i([D_i(\chi)]Q)$$

by performing $(t(\chi)-1)$-adic expansion, and $D_i(\chi)$ having maximum degree is set to $D_{dmax}(\chi)$.

And, a polynomial $f(\phi_q, \chi)$ with two variables of $\phi_q$ and $\chi$ defined as

$$\phi_q^{dmax}([D_{dmax}(\chi)]Q) = \Sigma \phi_q^i([D_i(\chi)]Q) - \phi_q^{dmax}([D_{dmax}(\chi)]Q)$$

$$= [f(\phi_q, \chi)]Q$$

is introduced.

Further, based on $\phi_q^k Q = Q$, a polynomial $h(\phi_q, \chi)$ with two variables of $\phi_q$ and $\chi$ defined as

$$[D_{dmax}(\chi)]Q = [f(\phi_q, \chi)\phi_q^{-dmax}]Q = [h(\phi_q, \chi)]Q$$

is introduced. That is, this polynomial $h(\phi_q, \chi)$ shows that the maximum degree $D_{dmax}(\chi)$ among $D_i(\chi)$ can be replaced with polynomial $h(\phi_q, \chi)$ which has variables of $\phi_q$ and $\chi$ and hence, can be suppressed to operations up to lower degree than the maximum degree. Particularly, in the case of $\chi=a$, it is possible to reduce the number of operations greatly by further performing $D_{dmax}(a)$-adic expansion of scalar n which has been performed (t-1)-adic expansion and by using h $(\phi_q, a)$ in place of $D_{dmax}(a)$ thus enabling to speed up scalar multiplication.

Still further, in the case where there exist a plurality of maximum degree terms among $D_i(\chi)$, letting the maximum degree be denoted by dmax, coefficients of $\chi^{dmax}$ which are terms having the maximum degree be $T_{dmax}(\phi_q)$, by using a minimum degree polynomial $m(\chi)$ which satisfies $r(\chi)|m(\chi)$, $V(\phi_q)$ which satisfies

$$V(\phi_q)|m(\phi_q), \quad gcd(T_{dmax}(\phi_q), V(\phi_q)) = 1,$$

is specified. Here, as polynomial $m(\chi)$, a cyclotomic polynomial or the like may be used.

And, using the extended Euclidian algorithm, an integer scalar v and $g(\phi_q)$ which satisfy

$$g(\phi_q)V(\phi_q) \equiv v(mod \ m(\phi_q))$$

are specified and, a polynomial $f(\phi_q, \chi)$ with two variables of $\phi_q$ and $\chi$ s introduced such that

$$[T_{dmax}(\phi_q)\chi^{dmax}]Q = \Sigma \phi_q^i([D_i(\chi)]Q) - [T_{dmax}(\phi_q)\chi^{dmax}]Q$$

$$= [f(\phi_q, \chi)]Q.$$

Further, using $g(\phi_q)$ and based on $\phi_q^k Q = Q$, letting

$$[v\chi^{dmax}]Q = [g(\phi_q, \chi)(f(\phi_q, \chi)]Q = [h(\phi_q, \chi)]Q,$$

a polynomial $h(\phi_q, \chi)$ with two variables of $\chi_q$ and $\chi$ is introduced.

And, by using a constant term $h(0, \chi)$ with regard to $\phi q$ of this $h(\phi_q, \chi)$, which satisfies,

$$[v\chi^{dmax} - h(0, \chi)]Q = [h(\phi_q, \chi) - h(0, \chi)]Q,$$

and letting $\chi=a$, s'=$va^{dmax}$-h(0,a) and h'($\phi_q$)=h($\phi_q$,a)-h(0,a), it is possible to reduce the number of operations by performing {$va^{dmax}$-h(0,a)-adic expansion of the scalar n which has been performed (t-1)-adic expansion, instead of performing $D_{dmax}(a)$-adic expansion, and using h($\phi_q$,a)-h(0,a) in place of $va^{dmax}$-h (0, a), thus enabling to speed up scalar multipli-

cation. Here, h'($\phi_q$) shows that it has now one variable of $\phi_q$ by substituting a for $\chi$ in polynomial h($\phi_q$,$\chi$) with two variables of $\phi_q$ and $\chi$.

Heretofore, an explanation is made about scalar multiplication. In the case of exponentiation, the following symbols are defined as

$F_q{}^k$: a k-th extension field of a finite field $F_q$ of order q;

H: a multiplicative subgroup of $F_q{}^k$ which has a prime order r; and

$\phi_q$: a Frobenius endomorphism of an element with respect to the finite field $F_q$, and an exponentiation of an element A in H to the power of n with respect to a non-negative integer n is performed. In this case, explanation can be made in a similar way just by letting a difference of q and r be s=q-r, replacing t-1 in the scalar multiplication with s, and reading above-mentioned explanation as the explanation of exponentiation. And hence, detailed explanation is omitted. In the case of the exponentiation, an operation of maximum degree part can be replaced with operations of lower degrees, and hence, it is possible to reduce the number of operations thus enabling to speed up the exponentiation.

In what follows, a concrete example is explained using a known pairing friendly curve.

There has been known a pairing friendly curve of embedding degree 8, in which a prime number r(x) which divides #E($F_q$) and a trace t($\chi$) of the Frobenius endomorphism $\phi_q$ are given as follows

$$r(\chi) = \chi^4 - 8\chi^2 + 25,$$

$$t(\chi) = (2\chi^3 - 11\chi + 15)/15.$$

In this case, by performing (t($\chi$)-1)-adic expansion of r($\chi$), and using the Frobenius endomorphism $\phi_q$,

$$2r(\chi) = (15\chi)\phi_q + (-5\chi^2 + 50),$$

$$0 \equiv (15\chi)\phi_q + (-5\chi^2 + 50) \pmod{r(\chi)}$$

are obtained.

Therefore, $D_i(\chi)$ becomes as

$$D_0(\chi) = -5\chi^2 + 50,$$

$$D_1(\chi) = 15\chi.$$

Since $D_0(\chi)$ has the maximum degree, by transposing terms except $D_0(\chi)$ to the right hand side,

$$-5\chi^2 + 50 = 15\chi\,\phi_q$$

is obtained. By arranging the above formula,

$$\chi^2 - 10 = 3\chi\,\phi_q$$

is obtained.

Therefore, in the case of computing the scalar multiplication of rational point Q in G with respect to non-negative integer n, or in the case of computing the exponentiation of an element A in H to the power of n with respect to non-negative integer n, by performing (t-1)-adic expansion of non-negative integer n, further performing $(\chi^2-10)$-adic expansion and using 15 $\chi$ $\phi_q$ in place of $\chi^2$-10, it is possible to compute the scalar multiplication by n of a rational point in G or exponentiation of an element A in H to the power of n using the Frobenius endomorphism $\phi_q$ with respect to a rational point thus enabling to reduce the number of operations to speed up the exponentiation.

In the case of another pairing friendly curve of embedding degree 8 in which prime number $r(\chi)$ which divides $\#E(F_q)$, and trace t of the Frobenius endomorphism $\phi_q$ are given as follows,

$$r(\chi) = \chi^8 - \chi^4 + 1,$$

$$t(\chi) = \chi^5 - \chi + 1,$$

by performing $(t(\chi)-1)$-adic expansion of $r(\chi)$ and using the Frobenius endomorphism $\phi_q$,

$$r(\chi) = \chi^3 \phi_q + 1,$$

$$0 \equiv 3\phi_q + 1 \pmod{r(\chi)}$$

are obtained.

Therefore, $D_i(\chi)$ becomes as

$$D_0(\chi) = -1,$$

$$D_1(\chi) = \chi^3.$$

Since $D_1(\chi)$ has the maximum degree, by tranposing terms except $D_1(\chi)\phi_q$ to the right hand side,

$$\chi^3 \phi_q = -1$$

is obtained and by multiplying the both sides by $\phi^{-1}$,

$$\chi^3 = -\phi_q^{-1}$$

is obtained.

Therefore, in the case of computing the scalar multiplication by n of rational point Q in G with respect to non-negative integer n, or in the case of computing the exponentiation of an element A in H to the power of n with respect to non-negative integer n, by performing (t-1)-adic expansion of non-negative integer n, by further performing $\chi^3$-adic expansion and by using in place of $\chi^3$, it is possible to compute the scalar multiplication by n of a rational point in G or exponentiation of element A in H to the power of n using the Frobenius endomorphism $\phi_q$ with respect to a rational point thus enabling to reduce the number of operations to speed up the exponentiation.

Further, there has been known a pairing friendly curve of embedding degree 10, in which prime number $r(\chi)$

which divides #E($F_q$) and trace t($\chi$) of the Frobenius endomorphism $\phi_q$ are given as follows

$$r(\chi) = 25\chi^4 + 25\chi^3 + 15\chi^2 + 5\chi + 1,$$

$$t(\chi) = 10\chi^2 + 5\chi + 3.$$

In this case, by performing (t($\chi$)-1)-adic expansion of r($\chi$), and using the Frobenius endomorphism $\phi_q$,

$$8r(\chi) = 2\phi_q^2 - \phi_q + (5\chi + 2),$$

$$0 \equiv 2\phi_q^2 - \phi_q + (5\chi + 2) \pmod{r(\chi)}$$

are obtained.
Therefore, $D_i(\chi)$ becomes as follows.

$$D_0(\chi) = 5\chi + 2,$$

$$D_1(\chi) = -1,$$

$$D_2(\chi) = 2,$$

Since $D_0(\chi)$ has the maximum degree among $D_i(\chi)$, by transposing terms except $D_0(\chi)$ to the right hand side,

$$5\chi + 2 = -2\phi_q^2 + \phi_q$$

is obtained.
Therefore, in the case of computing the scalar multiplication by n of rational point Q in G with respect to non-negative integer n, or in the case of computing the exponentiation of element A in H to the power of n with respect to non-negative integer n, by performing (t-1)-adic expansion of non-negative integer n, by further performing (5$\chi$+2)-adic expansion and by using -2$\phi_q$2+$\phi_q$,in place of 5$\chi$+2, it is possible to compute the scalar multiplication by n of a rational point in G or exponentiation of element A in H to the power of n using the Frobenius endomorphism $\phi_q$ with respect to a rational point thus enabling to reduce the number of operations to speed up the exponentiation.
Further, there has been known a pairing friendly curve of embedding degree 12, in which prime number r($\chi$) which divides #E($F_q$) and trace t($\chi$) of the Frobenius endomorphism $\phi_q$ are given as follows

$$r(\chi) = 36\chi^4 - 36\chi^3 + 18\chi^2 - 6\chi + 1,$$

$$t(\chi)=6\chi^2+1.$$

In this case, by performing (t(χ)-1)-adic expansion of r(χ), and using the Frobenius endomorphism $\phi_q$,

$$r(\chi)=\phi_q^2+(-6\chi+3)\phi_q+(-6\chi+1),$$

$$0\equiv\phi_q^2+(-6\chi+3)\phi_q+(-6\chi+1)\pmod{r(\chi)}$$

are obtained.
Therefore, $D_i(\chi)$ becomes as follows.

$$D_0(\chi)=-6\chi+1,$$

$$D_1(\chi)=-6\chi+3,$$

$$D_2(\chi)=1,$$

Here, since $D_0(\chi)$ and $D_1(\chi)$ both have the maximum degree, by transposing terms except terms of χ which give the maximum degree of $D_0(\chi)$ and $D_1(\chi)$ $\phi_q$ to the right hand side,

$$6\chi(\phi_q+1)=\phi_q^2+3\phi_q+1$$

is obtained.
Here, if $g(\phi_q)$ is set as $g(\phi_q)=\phi_q^4-\phi_q^2+1$, $g(\phi_q)$ satisfies $\gcd(\phi_q+1,g(\phi_q))=1$, and by using the extended Euclidian algorithm,

$$(\phi_q+1)^{-1}\equiv\phi_q^2(1-\phi_q)\pmod{g(\phi_q)}$$

is obtained.
Therefore, by multiplying the both sides by $\phi_q^2(1-\phi_q)$,

$$6\chi=\phi_q^2(1-\phi_q)(\phi_q^2+3\phi_q+1)$$

is obtained.
Therefore, in the case of computing the scalar multiplication by n of rational point Q in G with respect to non-negative integer n, or in the case of computing exponentiation of element A in H to the power of n with respect to non-negative integer n, by performing (t-1)-adic expansion of non-negative integer n, by further performing 6χ-adic expansion and by using $\phi_q^2(1-\phi_q)(\phi_q^2+3\phi_q+1)$ in place of 6χ, it is possible to compute the scalar multiplication by n of a rational point in G or exponentiation of element A in H to the power of n using the Frobenius endomorphism $\phi_q$ with respect to a rational point thus enabling to reduce the number of operations to speed up the exponentiation.
As a more concrete example, χ is assumed to be 825(10 bits).

In this case, r and t become as follows.
r=16656811746301(44 bits)
t=4083751(22 bits).
In this case, Since 6χ becomes as

$$6\chi=4950(13\ \text{bits})=\phi_q^2(1-\phi_q)(\phi_q^2+3\phi_q+1),$$

in the case of computing the scalar multiplication by n of rational point in G or computing the exponentiation of element A in H to the power of n, the scalar multiplication and the exponentiation are computed after converting into scalar multiplication or exponentiation of about 13 bits using the Frobenius endomorphism $\phi_q$ with respect to a rational point, it is possible to reduce the number of operations greatly.

Further, there has been known a pairing friendly curve of embedding degree 18, in which prime number r(χ) which divides #E($F_q$) and trace t(χ) of the Frobenius endomorphism $\phi_q$ are given as follows

$$r(\chi)=\chi^6+37\chi^3+343,$$

$$t(\chi)=(\chi^4+16\chi+7)/7.$$

In this case, by performing (t(χ)-1)-adic expansion of r(χ), and using the Frobenius endomorphism $\phi_q$,

$$r(\chi)=(7\chi^2)\phi_q+(21\chi^3+343),$$

$$0\equiv(7\chi^2)\phi_q+(21\chi^3+343)\ (\text{mod}\ r(\chi))$$

are obtained.

Therefore, $D_i(\chi)$ becomes as follows.

$$D_0(\chi)=21\chi^3-343,$$

$$D_1(\chi)=7\chi^2.$$

Since $D_0(\chi)$ has the maximum degree among $D_i(\chi)$, by transposing terms except $D_0(\chi)$ to the right hand side,

$$21\chi^3-343=7\chi^2\phi_q$$

is obtained. By arranging the above equation,

$$\chi^3-49=\chi^2\phi_q$$

is obtained.

Therefore, in the case of computing the scalar multiplication by n of rational point Q in G with respect to non-negative integer n, or in the case of computing the exponentiation of element A in H to the power of n with respect to non-negative integer n, by performing (t-1)-adic expansion of non-negative n, by further performing $(\chi^3-49)$-adic expansion and by using $\chi^2\phi_q$ in place of $\chi^3-49$, it is possible to compute the scalar multiplication by n of a rational point in G or exponentiation of element A in H to the power of n using the Frobenius endomorphism $\phi_q$ with respect to a rational point thus enabling to reduce the number of operations to speed up the exponentiation.

Finally, a scalar multiplication program and a exponentiation program are explained in detail. In addition, the scalar multiplication program and the exponentiation program, in this embodiment are executed respectively as one of the subroutines, when ID-based cryptography or group signature is performed by an electronic computer.

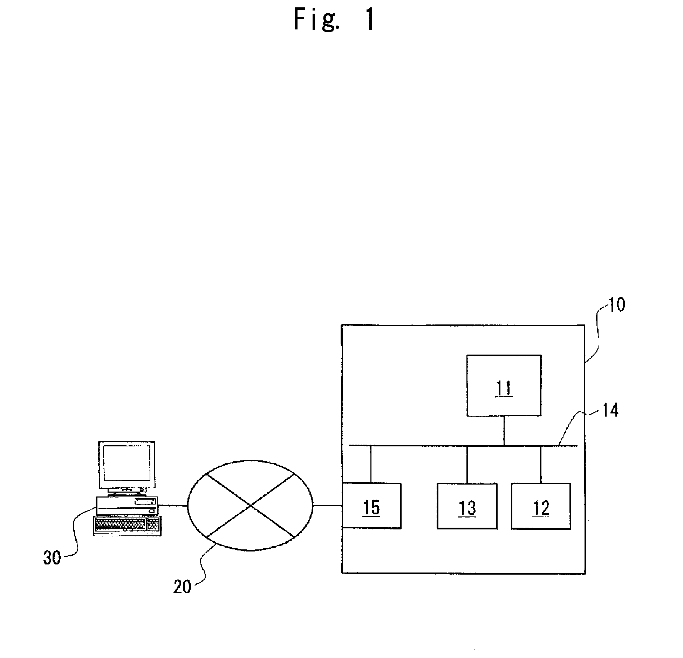

As shown in Fig.1, an electronic computer 10 which executes a scalar multiplication program and a exponentiation program includes a CPU 11 which executes arithmetic processing, a memory device 12 such as a hard disk or the like which stores required programs and data, memory device 13 constituted of RAM or the like which expands a required program and makes it executable and also temporarily stores the data generated along with the computation. In Fig.1, numeral 14 is a bus. In this embodiment, the memory device 12 is caused to store a program of main routine and various programs such as the scalar multiplication program and the exponentiation program, and the data which these programs use.

In the case where, for example, electronic computer 10 functions as an authentication device, the electronic computer connects to telecommunication lines 20 such as the Internet, receives a signature data of group signature transmitted from a client device 30 which is connected to these telecommunication lines 20, temporarily store the signature data in memory device 13, and performs authentication processing by determining the validity of the signature data based on a group signature-use program. In Fig.1, numeral 15 is an input/output part of electronic computer 10.

A scalar multiplication program and a exponentiation program are executed frequently in a processing of determining the validity of the signature data. In what follows, only the scalar multiplication program and the exponentiation program are explained. In addition, the scalar multiplication program and the exponentiation program according to the present invention are used not only in the processing of group signature but also for various kinds of use. Furthermore, the scalar multiplication program and the exponentiation program according to the present invention may be not only in a mode in which the scalar multiplication program and the exponentiation program can be stored in memory device 12, in a computer readable recording medium, or in memory device 12 by being downloaded from a server, but also in a so-called hardware implemented mode by being constituted as semiconductor circuits.

Firstly, scalar multiplication nQ by (t-1)-adic expansion is explained.

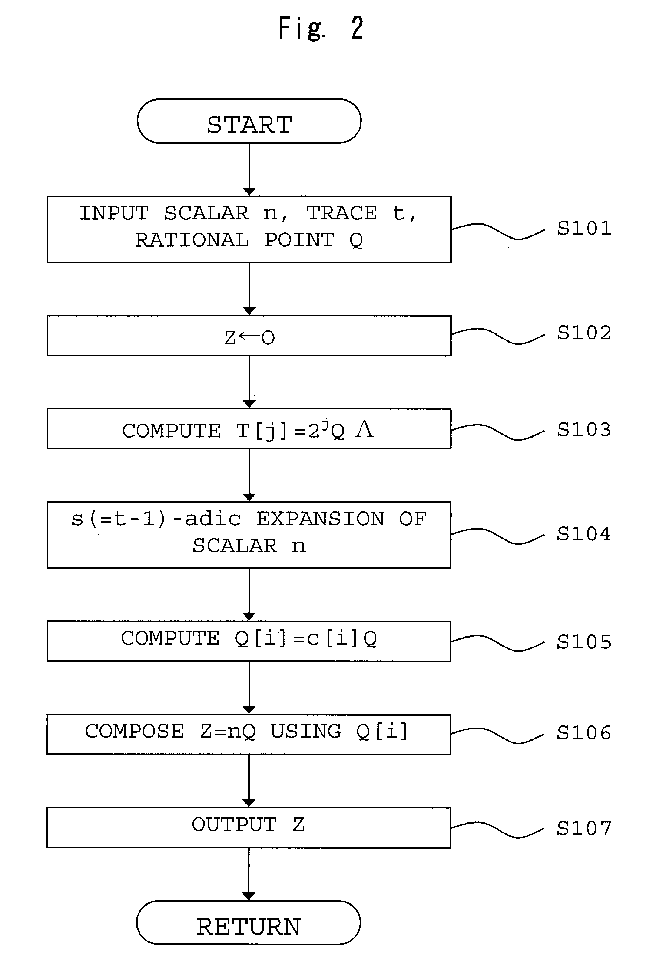

Fig.2 is a flowchart for obtaining scalar multiplication nQ(=Z). The electronic computer functions as a scalar multiplier by executing the scalar multiplication program. As shown in Fig.2, firstly, CPU 11 inputs values of scalar n, trace t of the Frobenius endomorphism with respect to $E(F_q)$, and rational point $Q \in G \subset E(F_q^k)$ from client device 30 via telecommunication lines 20 and input/output control part 15 and stores the values in memory device 13 (step S101). In this case, the electronic computer functions as an input means.

Next, CPU 11 secures, in memory device 13, Z which stores a computation result and initializes this $Z(Z \leftarrow 0)$ (step S102). Therefore, the electronic computer functions as the input means. CPU 11 performs a computation represented by $2^j Q$ with respect to inputted Q(step S103).

In step S103, letting $T[j]=2^j Q$, CPU 11 reads out Q and t from memory device 13 and performs the following algorithm.

(1) for(j=0;j< $\lceil \log_2 S \rfloor$ ;j++)
(2) T[j]←Q
(3) Q←Q+Q
(4) End for,

where $\lceil \log_2 S \rfloor$ in (1) means strictly

$$[F14]$$

$$\lceil \log_2 s \rfloor$$

however, due to display restrictions, $\lceil \ \rfloor$ is used. Here, CPU 11, letting s=t-1, and j be a natural number, performs assignment operations represented by T[j] ←Q and Q←Q+Q repeatedly from j=0 to j< $\lceil \log_2 S \rfloor$ and stores the value of the result in memory device 13. In addition, in what follows, $\lceil \ \rfloor$ in algorithms means the same.

Next, setting t-1=s, CPU 11 reads out values of c[i], s, and scalar n and functions as a transformation means and performs s-adic expansion of scalar n as below(step S104).

[F15]

$$n = \sum_{i=0}^{[\log_s n]} c[i]s^i, 0 \le c[i] \le s.$$

where i is a natural number and the size of i is decided by the size of n.

In step S104, CPU 11 performs the following algorithm as a computation of s-adic expansion.

```
(1) for(i=0;i< ⌈log_s n⌋ ;i++)
(2) c[i]←n%s
(3) n←(n-c[i])/s
(4) End for
```

where "%" denotes taking a remainder. That is, CPU 11 reads out values of c[i], s, and n from memory device 13 and performs assignment operations represented by c[i]←n%s and n←(n-c[i])/s repeatedly from i=0 to i< ⌈log_s n⌋ and stores values of each coefficient c[i] and scalar n in memory device 13.

Next, in this embodiment, CPU 11, as a second computation means, performs a computation of Q[i]=c[i]Q(step S105).

In step S105, a binary method is used and CPU 11 performs the following algorithm.

```
(1) for(i=0;i< ⌈log_s n⌋ ;i++)
(2) Q[i]←0
(3) for(j=0;c[i]!=0;i++)
(4) if(c[i]&1)
(5) Q[i]←Q[i]+T[j]
(6) End if
(7) C[i]←c[i]/2
(8) End for
(9) End for
```

That is, CPU 11, from i=0 to i< ⌈log_s n⌋ , initializes Q[i] stored in memory device 11 by an assignment operation of Q[i] ←0 repeatedly and further performs the following computation repeatedly. CPU 11 reads out the values of coefficient Q[i] and T[i] from memory device 13 and performs, when c[i]&1 holds true, an assignment operation represented by Q[i]←Q[i]+T[j], and when otherwise, performs an assignment operation represented by C[i]←c[i]/2, repeatedly from j=0 until c[i]!=0 and stores the values of each Q[i] and coefficient c[i] in memory device 13.

Next, the electronic computer functions as a composition means and composes scalar multiplication nQ using Q[i] computed in step S105 as below (step S106).

[F16]

$$nQ = \sum_{i=0}^{[\log_s n]} \phi_q^{\ i}(Q[i])$$

In step S106, CPU 11 performs the following algorithm.

```
(1) for(i=0; i< ⌈log_s n⌋ ;i++)
(2) Z←Z+φ_q^i(Q[i])
(3) End for
```

That is, CPU 11 reads out the values of Q[i] and Z from memory device 13, performs an assignment operation represented by Z ←Z+φ_q^i(Q[i]) repeatedly from i=0 to i< ⌈log_s n⌋ and stores the value of Z in memory device 13.

And, the electronic computer functions as an output means, outputs the value of Z from input/output control part 15 as the result of the scalar multiplication program(step S107) and finishes the scalar multiplication program. Due to this operation, scalar n is divided in log_s n, it is possible to reduce the number of operations of elliptic doubling approximately 1/log_s n using φ_q.

Moreover, in the case where order q of finite field $F_q$ of an elliptic curve, prime order r which divides #E($F_q$),

and trace t of the Frobenius endomorphism $\phi_q$ are preliminarily specified respectively as q($\chi$), r($\chi$), and t($\chi$) using an integer variable $\chi$, it is possible to speed up scalar multiplication nQ by performing (t($\chi$)-1)-adic expansion of r($\chi$), letting $D_i(\chi)$ with the maximum degree among Di($\chi$) represented by

$$[\mathrm{r}(\chi)]Q = \Sigma \, [\mathrm{D}_i(\chi)(\mathrm{t}(\chi)-1)^i]Q = \Sigma \, \phi_q^{\,i}([\mathrm{D}_i(\chi)]Q)$$

be $D_{dmax}(\chi)$, by using a polynomial f($\phi_q$, $\chi$) represented by

$$\phi_q^{\,dmax}([\mathrm{D}_{dmax}(\chi)]Q = \Sigma \, \phi_q^{\,i}([\mathrm{D}_i(\chi)]Q) - \phi_q^{\,dmax}([\mathrm{D}_{dmax}(\chi)]Q)$$

$$= [\mathrm{f}(\phi_q, \chi)]Q \;,$$

, and based on $\phi_q^k Q = Q$, by using a polynomial h($\phi_q$, $\chi$) represented by

$$[\mathrm{D}_{dmax}(\chi)]Q = [\mathrm{f}(\phi_q, \chi)\,\phi_q^{\,-dmax}]Q = [\mathrm{h}(\phi_q, \chi)]Q$$

and $D_{dmax}(\chi)$.

That is, in the case where $D_{dmax}(\chi)$ and polynomial h($\phi_q$, $\chi$) are specified, the number of operations is reduced by, letting $\chi$ =a, performing $D_{dmax}(a)$-adic expansion of scalar n, and by using h($\phi_q$,a) in place of $D_{dmax}(a)$.

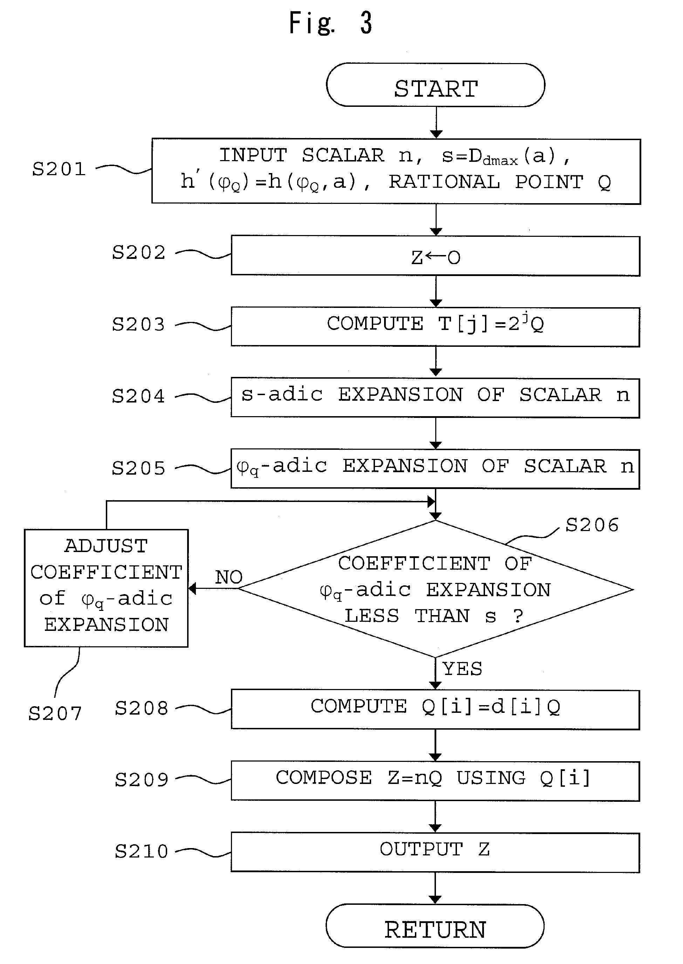

In the case of scalar multiplication nQ where $D_{dmax}(\chi)$ and polynomial h($\phi_q$, $\chi$) are specified, the electronic computer functions as scalar multiplier by executing a scalar multiplication program. In this case, as shown in Fig.3, firstly, CPU 11 inputs respective values of scalar n, letting $\chi$=a, s=$D_{dmax}(a)$ and h'($\phi_q$)=h($\phi_q$,a), and rational point Q$\in$ G$\subset$E($F_q$k) and stores the values in memory device 13(step S201). In this case, the electronic computer functions as an input means.

Next, the electronic computer functions as a initialization means. That is, CPU 11 secures, in memory device 13, Z which stores a computation result and initializes Z(Z $\leftarrow$0)(step S202). And the electronic computer functions as a first computation means. That is, CPU 11 preliminarily computes $2^j Q$ with respect to inputted Q(step S203). Since the computation in Step S203 is the same as the computation in step S103 in algorithm, an explanation is omitted.

Next, the electronic computer functions as a first expansion means and performs s-adic expansion of scalar n

[F17]

$$n = \sum_{i=0}^{[\log_s n]} c[i]s^i, 0 \le c[i] \le s.$$

(step S204). The s-adic expansion in step S204 is the same as the s-adic expansion in step S104 in algorithm, an explanation is omitted.

Next, the electronic computer functions as a second expansion means and performs $\phi_q$-adic expansion of scalar n using h'($\phi_q$) and c[i]

[F18]

$$n = \sum_{i=0}^{k-1} d[i]\phi_q^{\,i}, \; 0 \le d[i] \le s$$

(step S205).

In step S205, CPU 11 performs the following algorithm as a computation of $\phi_q$-adic expansion.

(1) T($\phi_q$)$\leftarrow$1

```
(2) for(i=0;i< ⌈log_s n⌋ ;i++)
(3) d[i]←c[i]
(4) if (d[i]≧s)
(5) for(j=0;j< ⌈log_s d[i]⌋ ;j++)
(6) e[j]←d[i]%s
(7) d[i]←(d[i]-e[j])%s
(8) End for
(9) U(φ_q)←1
(10) for(j=0;j< ⌈log_s d[i]⌋ ;j++)
(11) U(φ_q)←{U(φ_q)*e[j]*h'(φ_q)^j}%(φ_q^k-1)
(12) End for
(13) T(φ_q)←{T(φ_q)+U(φ_q)*h'(φ_q)^i}%(φ_q^k-1)
(14) End if
(15) else
(16) T(φ_q)←{T(φ_q)+d[i]*h'(φ_q)^i}%(φ_q^k-1)
(17) End else
(18) End for
```

That is, CPU 11 initializes $T(\phi_q)$ stored in memory device 13 as 1. CPU 11 reads out the value of c[i] from memory device 13, performs an assignment operation of d[i] ←c[i], and stores the value of d[i] in memory device 13. Next, CPU 11 reads out the values of d[i] and s from memory device 13, when d[i]≧s holds true, performs assignment operations represented by e[j]←d[i]%s and d[i]←(d[i]-e[j])%s repeatedly from j=0 to j< ⌈log_s d[i]⌋, after initializing $U(\phi_q)\leftarrow1$, performs an assignment operation represented by $U(\phi_q)\leftarrow\{U(\phi_q)^*e[j]^*h'(\phi_q)^j\}\%(\phi_q^k-1)$ repeatedly from j=0 to j< ⌈log_s d[i]⌋, performs an assignment operation represented by $T(\phi_q)\leftarrow\{T(\phi_q) + d[i]^*h'(\phi_q)^i\}\%(\phi_q^k-1)$, and stores the value of $T(\phi_q)$ in memory device 13. CPU 11, when d[i]≧s does not hold true, performs an assignment operation represented by $T(\phi_q)\leftarrow\{T(\phi_q)+d[i]^*h'(\phi_q)^i\}\%(\phi_q^k-1)$ and stores the value of $T(\phi_q)$ in memory device 13. CPU 11 performs the above-mentioned computations repeatedly from i=0 to i< ⌈log_s n⌋ and stores values of d[i] and $T(\phi_q)$ for each i in memory device 11.

In addition, in the case of $\phi_q$-adic expansion of scalar n, there is a case where coefficient d[i] in $\phi_q$-adic expansion becomes larger than s. CPU 11 compares coefficient d[i] in $\phi_q$-adic expansion with s and when CPU 11 determines coefficient d[i] is larger than s(step S206: NO), CPU 11 adjusts such that coefficient d[i] in $\phi_q$-adic expansion becomes smaller than s by taking a remainder of s with respect to coefficient d[i] in $\phi_q$-adic expansion (step S207). In this case, the electronic computer functions as a comparison means in step S206 and as an adjustment means in step S207.

In step S207, the electronic computer performs the following algorithm.

```
(1) until∀d[i]<s)
(2) for(i=0;i<k-1;i++)
(3) d[i]←the i-th coefficient of T(φ_q)
(4) if(d[i]≧s)
(5) the i-th coefficient of T(φ_q)←0
(6) for(j=0;j< ⌈log_s d[i]⌋ ;j++)
(7) e[j]←d[i]%s
(8) d[i]←(d[i]-e[j])%s
(9) End for
(10) U(φ_q)←1
(11) for(j=0;j< ⌈log_s d[i]⌋ ;j++)
(12) U(φ_q)←{U(φ_q)*e[j]*h'(φ_q)^j}%(φ_q^k-1)
(13) End for
(14) T(φ_q)←{T(φ_q)+U(φ_q)*φ_q^i}%(φ_q^k-1)
(15) End if
(16) End for
(17)End until
```

That is, CPU 11 reads out the value of i-th coefficient of $T(\phi_q)$ from memory device 13, stores the value in d[i], and compares d[i] with s. CPU 11, when d[i]≧s holds true, stores 0 in the i-th coefficient of $T(\phi_q)$, performs assignment operations represented by e[j]←d[i]%s and d[i]← (d[i]-e[j])%s repeatedly from j=0 to j< ⌈log_s d[i]⌋, next after initializing $U(\phi_q)\leftarrow1$, performs an assignment operation represented by $U(\phi_q)\leftarrow\{U(\phi_q)^*e[j]^*h'(\phi_q)^j\}\%(\phi_q^k-1)$ repeatedly from j=0 to j<⌈log_s d[i]⌋, next performs an assignment operation represented by $T(\phi_q)\leftarrow\{T(\phi_q)+U(\phi_q)^*\phi_q^i\}\%(\phi_q^k-1)$ and stores the

value of $T(\phi_q)$ in memory device 13. CPU 11, when d[i]≧s does not hold true, does not perform a series of operations mentioned above. CPU 11 performs all the above-mentioned operations repeatedly from i=0 to i<k-1 and until ∀d[i]<s holds true.

Next, the electronic computer functions as a second computation means performs an operation of Q[i]=d[i]Q (step S208).

Also in step 208, the binary method is used and CPU 11 performs the following algorithm.

```
(1) for(i=0;i<k;i++)
(2) Q[i]←0
(3) for(j=0;d[i]!=0;i++)
(4) if(d[i]&1)
(5) Q[i]←Q[i]+T[j]
(6) End if
(7) d[i]←d[i]/2
(8) End for
(9) End for
```

That is, CPU 11 reads out the values of d[i] and T[j], after initializing Q[i] by letting Q[i]←0, when d[i]&1 holds true, performs an assignment operation represented by Q[i] ←Q[i]+T[j], and when d[i]&1 does not hold true, performs an assignment operation represented by d[i]←d[i]/2, and stores the values of Q[i] and d[i] in memory device 13.

Next, the electronic computer functions as a composition means and composes scalar multiplication nQ using Q[i] computed in step S208 as below(step S209).

[F19]

$$nQ = \sum_{i=0}^{k-1} \phi_q^{\ i}(Q[i])$$

In step S209, CPU 11 performs the following algorithm.

```
(1) for(i=0;i<k;i++)
(2) Z←Z+φq^i(Q[i])
(3) End for
```

That is, CPU 11 reads out the values of Z and Q[i] from memory device 13, performs an assignment operation represented by Z←Z+$\phi_q^{\ i}$(Q[i]) repeatedly from i=0 to i<k, and stores the value of Z in memory device 13. CPU 11 outputs the value of Z from input/output control part 15. That is, the electronic computer functions as an output means, outputs Z as a result of scalar multiplication program(step S210), and finishes the scalar multiplication program. Since, due to this operation, scalar n is divided in $\log_s n$, it is possible to reduce the number of operations of elliptic doubling approximately to $\deg D_{dmax}(\chi)/\deg r (\chi)$ using $\phi_q$.

$D_{dmax}(\chi)$ and polynomial $h(\phi_q, \chi)$ , since order $q(\chi)$ of finite field $F_q$ of an elliptic curve, prime order $r(\chi)$ which divides $\#E(F_q)$, and trace $t(\chi)$ of the Frobenius endomorphism $\phi_q$ are preliminarily given, can be specified in advance. And hence, $D_{dmax}(\chi)$ and polynomial $h(\phi_q, \chi)$ may be integrated into the scalar multiplication program as well as $q(\chi)$,r $(\chi)$, and $t(\chi)$, or $D_{dmax}(\chi)$ and polynomial $h(\phi_q, \chi)$ may be obtained by the following auxiliary program using $r(\chi)$ and $t(\chi)$.

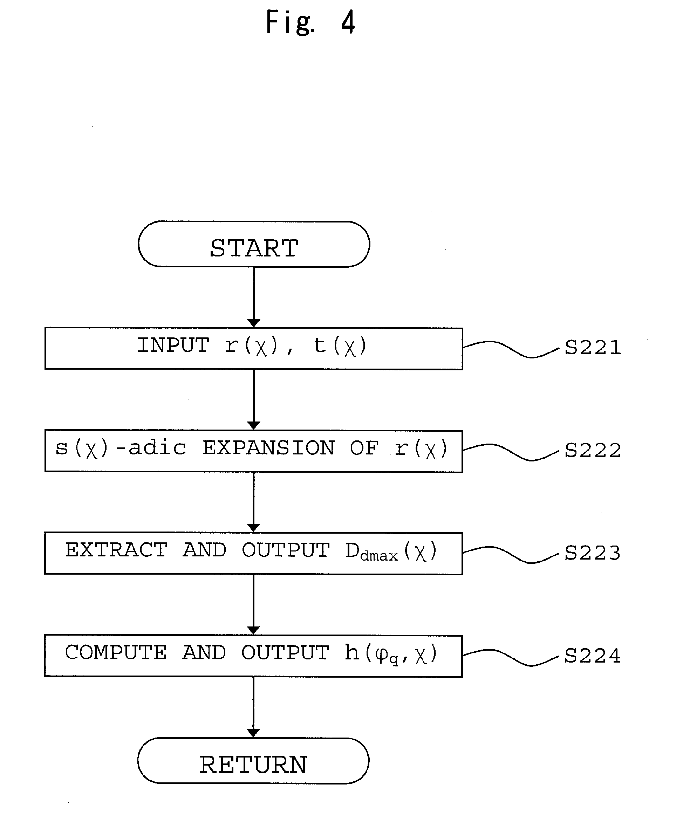

The electronic computer, when the auxiliary program is started, as shown in Fig. 4, firstly functions as an input means. That is, CPU 11 inputs values of $r(\chi)$ and $t(\chi)$ stores the values in memory device 13(step S221).

Next, the electronic computer functions as an expansion means and performs, letting $t(\chi)-1=s(\chi)$ using inputted $t(\chi)$, $s(\chi)$-adic expansion of $r(\chi)$ as below(step S222).

[F20]

$$r(\chi) = \sum_{i=0}^{\lceil \deg r(\chi)/\deg s(\chi) \rceil} D_i(\chi)s(\chi)^i, \ \ 0 \le \deg(D_i(\chi)) < deg\left(s(\chi)\right).$$

, where the size of i is decided automatically from $r(\chi)$ and $s(\chi)$. In step S222, CPU 11 performs the following algorithm as a computation of $s(\chi)$-adic expansion.

(1) for(1=0;i< ⌈degr(χ)/degs(χ)⌋ ;i++)
(2) Di(χ)←r(χ)%s(χ)
(3) r(χ)←(r(χ)-D$_i$(χ))/s(χ)
(4) End for

That is, CPU 11 reads out the values of r(χ) and s(χ) from memory device 13, performs assignment operations represented by D$_i$(χ)←r(χ)%s(χ) and r(χ)← (r(χ)-D$_i$(χ))/s(χ) repeatedly from i=0 to i< degr(χ)/degs(χ) and stores values of D$_i$(χ) and r(χ) in memory device 13.

Next, the electronic computer functions as an extraction means and extracts D$_i$(χ) having the maximum deg (D$_i$(χ)) and outputs it as D$_{dmax}$(χ)(step S223). That is, CPU 11 reads out the values of D$_i$(χ) from memory device 13, compares with each other, sets the maximum D$_i$(χ) as D$_{dmax}$(χ), and stores the value in memory device 13.

Next, the electronic computer functions as a computation means. That is, CPU 11 performs the following computation

[F21]

$$h(\phi_q, \chi) = \sum_{i=0}^{\lceil \deg r(\chi)/\deg s(\chi) \rceil} D_i(\chi)\left(\phi_q^{i-dmax}\right) - D_{dmax}(\chi).$$

and specifies polynomial h($\phi_q$, χ), stores the value in memory device 13, and outputs the value(step S224). In this way, the electronic computer can obtain D$_{dmax}$(χ) and polynomial h($\phi_q$, χ) using the auxiliary program. By using these D$_{dmax}$(χ) and polynomial h($\phi_q$, χ) in step S201 of Fig. 3, it is possible to reduce the number of operations of elliptic doubling by the scalar multiplication shown in Fig.3 approximately to degD$_{dmax}$(χ)/degr (χ).

Further, in the case where order q of finite field F$_q$ of an elliptic curve, prime order r which divides #E(F$_q$), and trace t of the Frobenius endomorphism $\phi_q$ are specified in advance respectively as q(χ), r(χ), and t(χ) using integer variable χ, and also there exist a plurality of D$_i$(χ) having the maximum degree dmax among D$_i$(χ) represented by

$$[r(\chi)]Q = \Sigma [D_i(\chi)(t(\chi)-1)^i]Q = \Sigma \phi_q^i([D_i(\chi)]Q)$$

by performing (t(χ)-1)-adic expansion of r(χ),
it is possible to speed up scalar multiplication nQ in which letting coefficients of χ$^{dmax}$ which are terms with the maximum degree dmax be T($\phi_q$), using a minimum degree polynomial m(χ) which satisfies r(χ)|m(χ), V($\phi_q$) which satisfies

$$V(\phi_q)|m(\phi_q) \text{ and } gcd(T_{dmax}(\phi_q), V(\phi_q))=1,$$

is specified,
integer scalar v and g($\phi_q$) which satisfy

$$g(\phi_q)V(\phi_q) \equiv v(\mod m(\phi_q))$$

is specified by the extended Euclidian algorithm, using a polynomial f($\phi_q$, χ) and g($\phi_q$) which satisfy

$$[T_{dmax}(\phi_q)\chi^{dmax}]Q = \Sigma \phi_q^i([D_i(\chi)]Q) - [T_{dmax}(\phi_q)\chi^{dmax}]Q$$

$$= [f(\phi_q, \chi)]Q$$

and based on $\phi_q^k Q = Q$, polynomial h($\phi_q$, χ) which satisfies

$$[v \chi^{dmax}]Q=[g(\phi_q)f(\phi_q,\chi)]Q=[h(\phi_q,\chi)]Q$$

is specified and a fact that a constant term $h(0, \chi)$ of this $h(\phi_q, \chi)$ with respect to $\phi_q$ satisfies

$$[v \chi^{dmax}-h(0,\chi)]Q=[h(\phi_q,\chi)-h(0,\chi)]Q$$

is used.

That is, letting $\chi=a$, $s'=va^{dmax}-h(0,a)$ and $h'(\phi_q)=h(\phi_q,a)-h(0,a)$, by performing $(va^{dmax}-h(0,a))$-adic expansion of scalar n instead of performing $D_{dmax}(a)$-adic expansion, and by using $h(\phi_q,a)-h(0,a)$ in place of $Va^{dmax}-h(0,a)$, the number of operations is reduced.

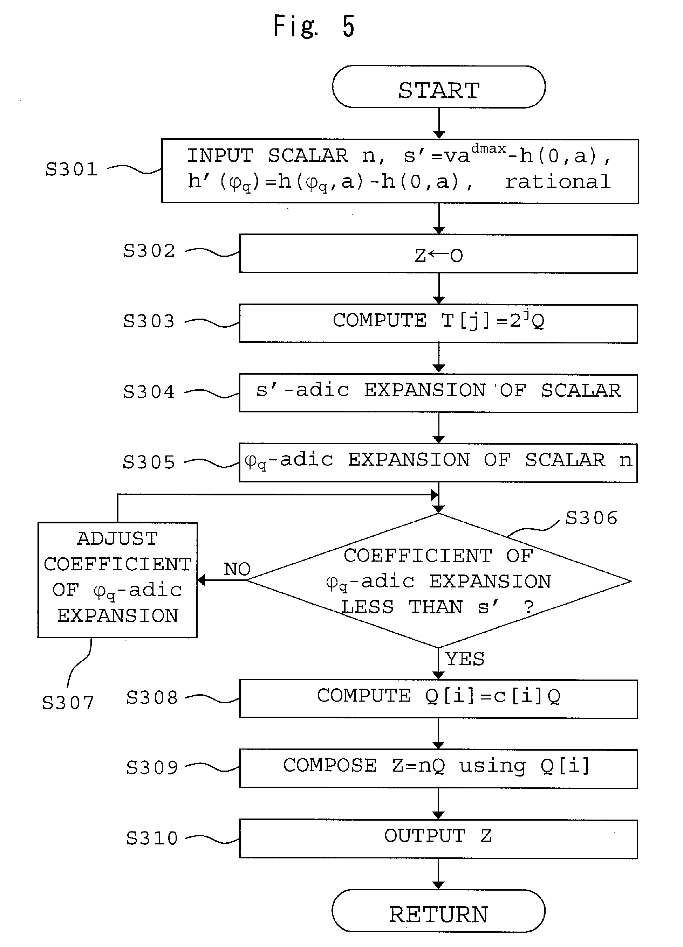

In the case of scalar multiplication nQ where $s'=va^{dmax}-h(0,a)$ and $h'(\phi_q)=h(\phi_q,a)-h(0,a)$ are specified, the electronic computer functions as scalar multiplier by executing a scalar multiplication program. On this occasion, as shown in Fig.5, firstly, CPU 11 inputs values of scalar n, letting $\chi=a$, scalar $s'=va^{dmax}-h(0,a)$ and $h'(\phi_q)=h(\phi_q,a)-h(0,a)$ and rational point $Q \in G \subset E(F_q^k)$ and stores the values in memory device 13(step S301). In this case, the electronic computer functions as an input means.

Next, the electronic computer functions as an initialization means, CPU 11 secures, in memory device 13, Z which stores a result of computation and initializes $Z(Z \leftarrow 0)$ (step S302). And, the electronic computer functions as a first computation means and reads out the value of Q stored in memory device 13, computes $2^iQ$ in advance, and stores the results in memory device 13 (step S303). Since the computation in step S303 is the same as in step S103 in algorithm and the processings executed by CPU 11 in these steps are also the same, an explanation is omitted.

Next the electronic computer functions as a first expansion means and performs s'-adic expansion of scalar n

[F22]

$$n = \sum_{i=0}^{[\log_s n]} c[i]s'^i, 0 \leq c[i] \leq s'.$$

(step S304). Since the s'-adic expansion in Step S304 is the same as the s-adic expansion in step S204 in algorithm, and processings executed by CPU 11 are the same, an explanation is omitted.

Next, the electronic computer functions as a second expansion means and performs $\phi_q$-adic expansion of scalar n using $h'(\phi_q)$ and c[i]

[F23]

$$n = \sum_{i=0}^{k-1} d[i]\phi_q^{i}, \ 0 \leq d[i] \leq s'$$

(step S305). Since $\phi_q$-adic expansion in step S305 is the same in algorithm as s-adic expansion in step S205 other than that scalar $s(=va^{dmax}-h(0,a))$ differs scalar $s(=D_{dmax}(a))$ in step S205, and processings executed by CPU 11 in these steps are the same, a detailed explanation is omitted.

In $\phi_q$-adic expansion in step S305, there is also a case where coefficient of $\phi_q$-adic expansion becomes larger than s'. In this case where coefficient of $\phi_q$-adic expansion becomes larger than s'(step S306:NO), coefficients of $\phi_q$-adic expansion are adjusted to become smaller than s' by taking a remainder of s' with respect to coefficient of $\phi_q$-adic expansion (step S307). Since this computation in step S307 is the same in algorithm as the computation in step S207 other than that scalar $s'(=va^{dmax}-h(0,a))$ differs scalar $s(=_Ddmax(a))$ in step S207, and processing executed by CPU 11 in these steps are the same, a detailed explanation is omitted. In this case, the electronic computer functions as a comparison means in step S306 and an adjustment means in step S307.

Next, the electronic computer functions as a second computation means and performs an operation of Q[i]=d[i]Q(step S308). In step S308, the binary method is also used and since a computation in step 308 is the same as the computation in step 208 in algorithm and processing executed by CPU 11 in these steps are also the same, an explanation is omitted.

Next, the electronic computer functions as a composition means and composes scalar multiplication nQ using Q[i] computed in step S308

[F24]

$$nQ = \sum_{i=0}^{k-1} \phi_q^{\ i}(Q[i])$$

(step S309). Since a computation in step 309 is the same as the computation in step 209 in algorithm and processings executed by CPU 11 in these steps are also the same, an explanation is omitted.

Next, the electronic computer functions as an output means and outputs Z as a result of the scalar multiplication program(step S310) and finishes the scalar multiplication program. Accordingly, due to this operation, since scalar n is divided in $\log_s n$, it is possible to reduce the number of operations of elliptic doubling approximately to dmax/deg(a) using $\phi_q$.

Polynomial h($\phi_q$, $\chi$) and v $\chi^{dmax}$-h(0, $\chi$), since order q($\chi$) of finite field $F_q$ of an elliptic curve, prime order r($\chi$) which divides #E($F_q$), and trace t($\chi$) of the Frobenius endomorphism $\phi_q$ are preliminarily given, can be specified in advance. Accordingly, polynomial h($\phi_q$, $\chi$) and v$\chi^{dmax}$-h(0, $\chi$) may be integrated into the scalar multiplication program as well as q($\chi$),r($\chi$) and t($\chi$) or polynomial h($\phi_q$, $\chi$) and v$\chi^{dmax}$-h(0, $\chi$) may be obtained by the following auxiliary program using r($\chi$) and t($\chi$).

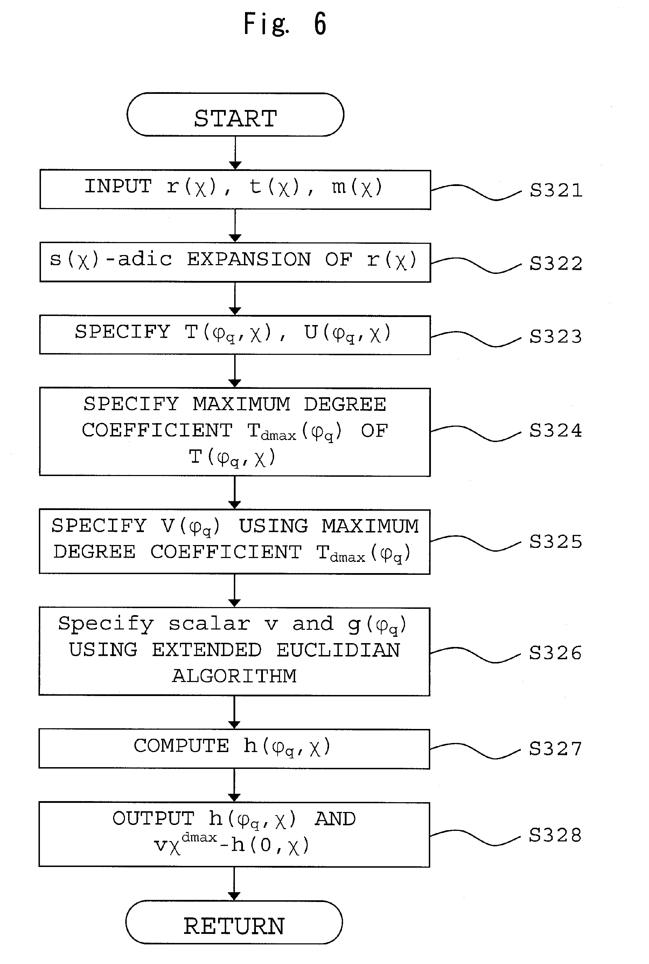

The electronic computer functions as shown in Fig.6, firstly as an input means by starting an auxiliary program. CPU 11 stores values of r($\chi$), t($\chi$), and m($\chi$) which are inputted in memory device 13 (step S321). Here, m($\chi$) is a minimum degree polynomial which satisfies r($\chi$)|m($\chi$) and in general a cyclotomic polynomial is used as m($\chi$).

Next, the electronic computer functions as an expansion means and performs s ($\chi$) -adic expansion of r ($\chi$), using inputted t($\chi$) and letting t($\chi$)-1=s($\chi$),as

[F25]

$$r(\chi) = \sum_{i=0}^{\lceil \deg r(\chi)/\mathrm{degs}(\chi) \rceil} D_i(\chi)s(\chi)^i, \ \ 0 \le \deg\bigl(D_i(\chi)\bigr) < deg\bigl(s(\chi)\bigr)$$

(step S322). Here, the size of i is automatically decided by r($\chi$) and s($\chi$). In step S322, CPU 11 performs the following algorithm as a computation of s($\chi$)-adic expansion.

    (1) for(i=0;i<⌈degr($\chi$)/degs($\chi$)⌋;i++)
    (2) Di($\chi$)←r($\chi$)%s($\chi$)
    (3) r($\chi$)←(r($\chi$)-D$_i$($\chi$))/s($\chi$)
    (4) End for

That is, CPU 11 reads out the values of r($\chi$) and $\chi$ from memory device 13 and performs assignment operations represented by D$_i$($\chi$)←r($\chi$)%s($\chi$) and r($\chi$)←(r($\chi$)-D$_i$($\chi$))/s($\chi$) repeatedly from i=0 to i<⌈degr($\chi$)/degs($\chi$)⌋ and stores values of D$_i$($\chi$) and r($\chi$) in memory device 13.

Next, the electronic computer functions as a first specifying means and extracts coefficients of $\chi^{dmax}$ which are terms having maximum degree dmax among deg(D$_i$($\chi$)) and sets the sum of the extracted coefficients as T($\phi_q$, $\chi$) and sets the sum of the other coefficients as U($\phi_q$, $\chi$) (step S323). In step S323, to be more specific, CPU 11 performs the following algorithm.

    (1) for(i=0;i<⌈degr($\chi$)/degs($\chi$)⌋;i++)
    (2) T($\phi_q$, $\chi$)←0, U($\phi_q$, $\chi$)←0
    (3) if deg(D$_i$($\chi$))=dmax)
    (4) T($\phi_q$, $\chi$)←T($\phi_q$, $\chi$)+D$_i$($\chi$)$\phi_q^{\ i}$
    (5) End if
    (6) else
    (7) U($\phi_q$, $\chi$)←U($\phi_q$, $\chi$)+D$_i$($\chi$)$\phi_q^{\ i}$
    (8) End else
    (9) End for

That is, CPU 11 reads out values of r($\chi$), s($\chi$), and D$_i$($\chi$) from memory device 13 and after initializing processing of T ($\phi_q$, $\chi$)←0, U($\phi_q$, $\chi$)←0, performs, in the case of deg(D$_i$($\chi$))=dmax, an assignment operation represented by T($\phi_q$,

$\chi)\leftarrow T(\phi_q, \chi) + D_i(\chi)\phi_q^i$ and in the case of deg(D$_i(\chi)$) #dmax, an assignment operation represented by U$(\phi_q, \chi)\leftarrow U(\phi_q, \chi)$ +D$_i(\chi)\phi_q^i$ repeatedly from i=0 to i<⌈degr($\chi$)/degs($\chi$)⌋ and stores values of T$(\phi_q, \chi)$ and U$(\phi_q, \chi)$ in memory device 13.

Next, the electronic computer functions as a second specifying means. CPU 11 specifies maximum degree coefficient T$_{dmax}(\phi_q)$ among T$(\phi_q, \chi)$ specified in step S323 and stores T$_{dmax}(\phi_q)$ in memory device 13(step S324).

Next, the electronic computer functions as a third specifying means and specifies V$(\phi_q)$ which satisfies

$$V(\phi_q) \mid m(\phi_q), \quad gcd(T_{dmax}(\phi_q, V(\phi_q)) = 1$$

using maximum degree coefficient T$_{dmax}(\phi_q)$ specified in step S324(step S325). In step 325, CPU 11 concretely performs the following algorithm.

    (1) W$(\phi_q)\leftarrow$gcd(T$_{dmax}(\phi_q)$,m$(\phi_q)$)
    (2) V$(\phi_q)\leftarrow$W$(\phi_q)$

That is, CPU 11 reads out the values of T$_{dmax}(\phi_q)$ and m$(\phi_q)$, performs assignment operations represented by W$(\phi_q)\leftarrow$ gcd(T$_{dmax}(\phi_q)$,m$(\phi_q)$) and V$(\phi_q)\leftarrow$W$(\phi_q)$ and stores values of W$(\phi_q)$ and V$(\phi_q)$ in memory device 13.

Next, the electronic computer functions as a fourth specifying means. That is, CPU 11 reads out V$(\phi_q)$ specified in step 325 from memory device 13, specifies scalar v and g($\phi$ q) which satisfy g$(\phi_q)$V$(\phi_q)\equiv$v(mod m$(\phi_q)$) using the extended Euclidian algorithm and stores the scalar v and g$(\phi_q)$ in memory device 13(step S326). This extended Euclidian algorithm is performed based on a known program prepared in a general library. In particular, it is desirable to make the coefficient of g$(\phi_q)$ and the scalar v become small.

Next, CPU 11 reads out g$(\phi_q)$ specified in step S326 from memory device 13 and performs an operation of

[F26]

$$h(\phi_q, \chi) = g(\phi_q)\Big(T(\phi_q, \chi) - T_{dmax}(\phi_q)\chi^{dmax} + U(\phi_q, \chi)\Big) mod\phi_q^k - 1$$

and specifies polynomial h$(\phi_q, \chi)$ (step S327) and stores values of h$(\phi_q, \chi)$ and v $\chi^{dmax}$-h(0, $\chi$) in memory device 13 and outputs (step S328). In this way, the electronic computer can obtain polynomial h$(\phi_q, \chi)$ and v $\chi^{dmax}$-h(0, $\chi$). In this case, the electronic computer functions as the computation means in step S327 and functions as the output means in step S328. By the scalar multiplication shown in Fig.5, using these v $\chi^{dmax}$-h(0, $\chi$) and polynomial h$(\phi_q, \chi)$ in step s301 in Fig.5, it is possible to reduce the number of operations of elliptic doubling approximately to dmax/degr($\chi$).

In what follows, an exponentiation program is explained. Firstly, exponentiation A$^n$ by (t-1)-adic expansion is explained.

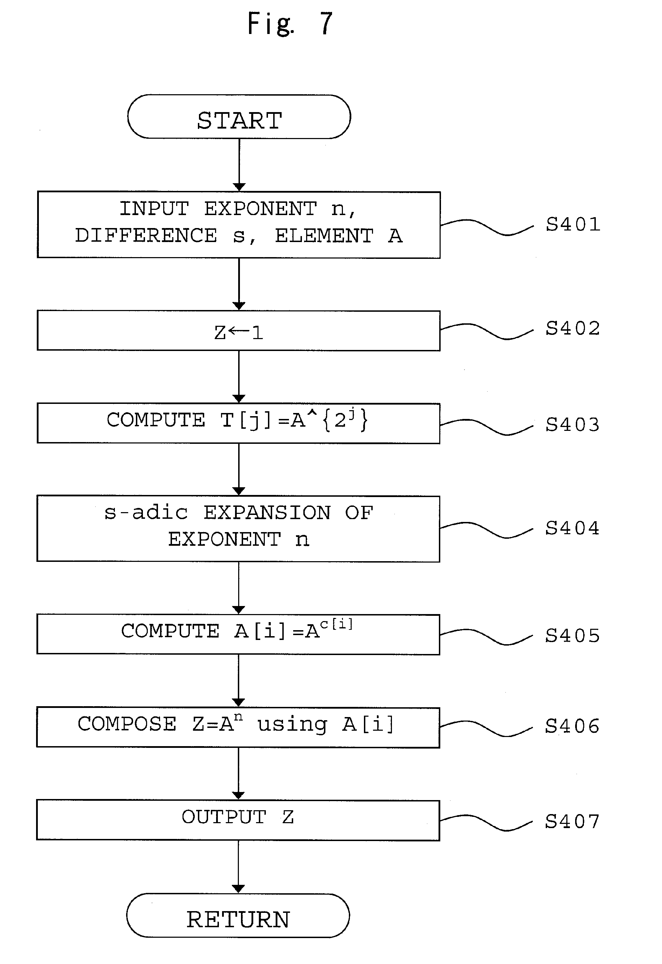

In causing the electronic computer to function as exponentiater by executing the exponentiation program, as shown in Fig.7, firstly, exponent n, difference s between order q and prime order r of F$_q^k$, and element A$\in$H$\subset$F$_q^k$ are inputted(step S401). In this case, the electronic computer functions as an input means.

Next, the electronic computer functions as an initialization means. That is, CPU 11 secures, in memory device 13, z which stores a result of computation and initializes this Z(Z$\leftarrow$1)(step S402). And the electronic computer functions as a first computation means. CPU 11 inputs a value of element A and stores the value in memory device 13 and computes in advance A^{2$^j$} with respect to inputted element A (step S403), where X^{Y} denotes X$^Y$.

In step S403, letting T[j]=A^{2$^j$}, CPU 11 performs the following algorithm.

    (1) for(;j++)
    (2) T[j]$\leftarrow$A
    (3) A$\leftarrow$A*A
    (4) End for

That is, CPU 11 reads out the values of element A and s, performs assignment operations represented by T [j]$\leftarrow$A and A $\leftarrow$A*A repeatedly from j=0 to j<⌈log$_2$s⌋ and stores the values of T[j] and A in memory device 13.

Next, the electronic computer functions as an expansion means and performs s-adic expansion of exponent n using difference s

[F27]

$$n = \sum_{i=0}^{[\log_s n]} c[i]s^i, \ 0 \le c[i] \le s.$$

(step S404). Here, the size of i is decided by the size of n.

In step S404, CPU 11 performs, as a computation of s-adic expansion, the following algorithm.

```
(1) for(i=0;i<⌈ioggn⌋;i++)
(2) c[i]←n%s
(3) n←(n-c[i])/s
(4) End for
```

Here, "%" implies taking a remainder. That is, CPU 11 reads out values of n, s from memory device 13 and performs assignment operations represented by c[i]←n%s and n←(n-c[i])/s from i=0 to i<⌈log_s n⌋ and stores the values of each coefficient c[i] and n in memory device 13.

Next, in this embodiment, CPU 11 functions as a second computation means and performs an operation of A[i]=A$^{c[i]}$(step S405).

In step S405, the binary method is used and CPU 11 performs the following algorithm.

```
(1) for(i=0;i<⌈logsn⌋;i++)
(2) A[i]←1
(3) for(j=0;c[i]!=0,i++)
(4) if(c[i]&1)
(5) A[i]←A[i]*T[j]
(6) End if
(7) c[i]←c[i]/2
(8) End for
(9) End for
```

That is, CPU 11, from i=0 to i<⌈log_s n⌋ , initializes A[i] stored in memory device 11 by an assignment operation of A[i] ←1 and further performs the following computation repeatedly. CPU 11 reads out the values of each coefficient c[i] and T[j] from memory device 13 and performs an assignment operation of Q[i]←Q[i]*T[j] when c[i]&1 holds true and performs an assignment operation of c[i]←c[i]/2 when otherwise repeatedly from j=0 until c[i]!=0 and stores the values of each Q[i] and coefficient c[i] in memory device 13.

Next, the electronic computer functions as a composition means and composes exponentiation A$^n$ using A[i] computed in step S405

[F28]

$$A^n = \prod_{i=0}^{[\log_s n]} \phi_q^{\ i} (A[i])$$

(step S406).

In step S406, CPU 11 performs the following algorithm.

```
(1) for(i=0;i<⌈log_s n⌋;i++)
(2) Z←Z*φ_q^i(A[i])
(3) End for
```

That is, CPU 11 reads out the values of A[i] and Z from memory device 13 and performs an assignment operation represented by Z←Z*φ_q$^i$(A[i]) repeatedly from i=0 to i<⌈log_s n⌋ and stores the value of Z in memory device 13.

And, the electronic computer functions as an output means and outputs the value of Z from input/output control part 15 as a result of the exponentiation program(step S407) and finishes the exponentiation program. Due to this operation, exponent n is divided in log_s n and hence, using φ_q, it is possible to reduce the number of operations of elliptic doubling approximately to 1/(log_s n).

And, in the case where order q, prime order r, and difference s are given respectively as q($\chi$), r($\chi$), and s($\chi$) using integer variable $\chi$, it is possible to speed up scalar multiplication nQ, in which, letting $D_i(\chi)$ having maximum degree be $D_{dmax}(\chi)$ among $D_i(\chi)$ represented by

$$\mathrm{A^{\{r(\chi)\}}=\Pi A^{\{D_i(\chi)s(\chi)^i\}}=A^{\{\Sigma D_i(\chi)q^i\}}}$$

by s($\chi$)-adic expansion of r($\chi$), polynomial f($\phi_q$, $\chi$) which satisfies

$$\mathrm{(A^{\{D_{dmax}(\chi)\}})^{\{q^{dmax}\}}=A^{\{\Sigma_{i\neq dmax}-D_i(\chi)q^i\}}=A^{\{f(q,\chi)\}}}$$

is used,
and based on $\phi^k_q(A)=A$, h($\phi_q$, $\chi$) and $D_{dmax}(\chi)$ which satisfy

$$\mathrm{A^{\{D_{dmax}(\chi)\}}=A^{\{\Sigma_{i\neq dmax}-D_i(\chi)-q^{dmax}\}}=A^{\{h(\phi_q,\chi)\}}}$$

is used.

That is, in the case where $D_{dmax}(\chi)$ and polynomial h($\phi_q$, $\chi$) are specified, the number of operations is reduced by, letting $\chi=a$, performing $D_{dmax}(a)$-adic expansion of exponent n and by using h($\phi_q$,a) in place of $D_{dmax}(a)$.

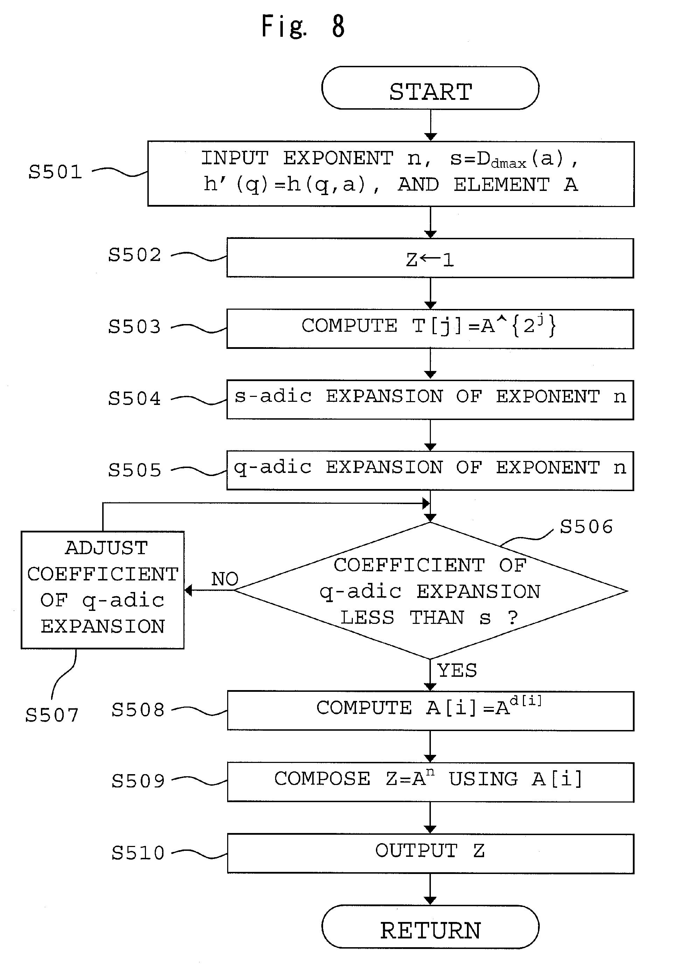

In the case of exponentiation nQ where $D_{dmax}(\chi)$ and polynomial h($\phi_q$, $\chi$) are specified, the electronic computer functions as an exponentiater by executing the exponentiation program. In this case, as shown in Fig. 8, firstly, CPU 11 inputs values of exponent n, letting $\chi=a$, s=$D_{dmax}(a)$ and h' (q) =h (q, a), and element A∈H⊂$F_q^k$ and stores the values in memory device 13 (step S501). In this case, the electronic computer functions as the input means.

Next, the electronic computer functions as the initialization means. That is, CPU 11 secures, in memory device 13, Z which stores a result of computation and initializes Z (Z ←1)(step S502). And as the first computation means, A^{$2^j$} are computed in advance with respect to inputted A(step S503). Since the computation in step S503 is the same as the computation in step S403 in algorithm, an explanation is omitted.

Next, the electronic computer functions as the first expansion means and performs s-adic expansion of exponent n

[F29]

$$n = \sum_{i=0}^{\lceil \log_s n \rceil} c[i]s^i, \ 0 \le c[i] \le s.$$

(step S504). Since s-adic expansion in step S504 is the same as the s-adic expansion in step S404 in algorithm, an explanation is omitted.

Next, the electronic computer functions as the second expansion means and performs q-adic expansion of exponent n using h'(q) and c[i]

[F30]

$$n = \sum_{i=0}^{k-1} d[i]q^i, \ 0 \le d[i] \le s$$

(step S505).

In step S505, as a computation of q-adic expansion, CPU 11 performs the following algorithm.

(1) T(q)←1
(2) for(i=0;i<⌈$\log_s$ n⌋;i++)
(3) d[i]←c[i]

```
(4) if(d[i]≧s)
(5) for(j=0;j<⌈log_s d[i]⌋;j++)
(6) e[j]←d[i]%s
(7) d[i]←(d[i]-e[j])%s
(8) End for
(9) U(q)←1
(10) for(j=0;j<⌈log_s d[i]⌋;j++)
(11) U(q)←{U(q)*e[j]*h'(q)^j}%(q^k-1)
(12) End for
(13) T(q)←{T(q)+U(q)*h'(q)^i}%(q^k-1)
(14) End if
(15) else
(16) T(q)←{T(q)+d[i]*h'(q)^i}%(q^k-1)
(17) End else
(18)End for
```

That is, CPU 11 initializes $T(q)$ stored in memory device 13 to 1. CPU 11 reads out the value of $c[i]$ from memory device 13, performs an assignment operation of $d[i]←c[i]$ and stores the value of $d[i]$ in memory device 13. Next, CPU 11 reads out the values of $d[i]$ and $s$, and in the case where $d[i]≧s$ holds true, performs assignment operations represented by $e[j]←d[i]\%s$ and $d[i]←(d[i]-e[j])/s$ repeatedly from $j=0$ to $j< ⌈log_s d[i]$ and after initializing $U(\phi_q)←1$, performs an assignment operation represented by $U(q)←\{U(q)*e[j]*h'(q)^j\}\%(q^k-1)$ repeatedly from $j=0$ to $j< ⌈log_s d[i]$ and next, performs an assignment operation represented by $T(q)←\{T(q)+U(q)*h'(q)^i\}\%(q^k-1)$ and stores the value of $T(q)$ in memory device 13. CPU 11 , in the case where $d[i]≧s$ does not hold true, performs an assignment operation represented by $T(q)←\{T(q)+d[i]*h'(q)^i\}\%(q^k-1)$ and stores the value of $T(q)$ in memory device 13. CPU 11 performs the above mentioned computation repeatedly from $i=0$ to $i<⌈log_s n⌋$ and stores values of $d[i]$ and $T(q)$ for each $i$ in memory device 11.

In addition, in the case of q-adic expansion of exponent n, there is a case where a coefficient of q-adic expansion becomes larger than s. CPU 11 compares coefficient $d[i]$ of q-adic expansion with $s$. And when CPU 11 determines that coefficient $d[i]$ of q-adic expansion is larger than s(step S506:NO), CPU 11 adjusts so that coefficient $d[i]$ of q-adic expansion becomes small by taking a remainder of s with respect to coefficient $d[i]$ of q-adic expansion (step S507). In this case, the electronic computer functions as the comparison means in step S506 and functions as the adjustment means in step S507.

In step S507, the electronic computer performs the following algorithm.

```
(1) until(∀d[i]<s)
(2) for(i=0;i<k-1;i++)
(3) d[i]←the i-th coefficient of T(q)
(4) if(d[i]≧s)
(5) the i-th coefficient of T(q)←0
(6) for(j=0;j<⌈log_s d[i]⌋;j++)
(7) e[j]←d[i]%s
(8) d[i]←(d)i]-e[j])%s
(9) End for
(10) U(q)←1
(11) for(j=0;j<⌈log_s d[i]⌋;j++)
(12) U(q)←{U(q)*e[j]*h'(q)^j}%(q^k-1)
(13) End for
(14) T(q)←{T(q)+U(q)*q^i}%(q^k-1)
(15) End if
(16) End for
(17)End until
```

That is CPU 11 reads out the value of the i-th coefficient of $T(q)$ from memory device 13 and stores the value in $d[i]$. CPU 11 compares $d[i]$ with $s$ and, when $d[i]≧s$ holds true, stores 0 in the i-th coefficient of $T(q)$ and performs assignment operations represented by $e[j]←d[i]\%s$ and $d[i]←(d[i]-e[j])\%s$ repeatedly from $j=0$ to $j<⌈log_s d[i]⌋$. Next, after initializing $U(q)←1$, CPU 11 performs an assignment operation represented by $U(q)←\{U(q)*e[j]*h'(q)^j\}\%(q^k-1)$ repeatedly from $j=0$ to $j< ⌈log_s d[i]⌋$, and next, performs an assignment operation represented by $T(q)←\{T(q)+U(q)*q^i\}\%(q^k-1)$ and stores the value of $T(q)$ in memory device 13. CPU 11, when $d[i]≧s$ does not hold true, does not perform a series of above mentioned computation. CPU 11 performs the above mentioned computation repeatedly from $i=0$ to $i<k-1$ and

until $\forall d[i] < s$ holds true.

Next, the electronic computer functions as the second computation means and performs an operation of A[i] $=A^{d[i]}$(step S508).

In step S508, the binary method is used and CPU 11 performs the following algorithm.

(1) for(i=0;i<k;i++)
(2) A[i]←0
(3) for(j=0;d[i]!=0;i++)
(4) if(d[i]&1)
(5) A[i]←A[i]*T[j]
(6) End if
(7) d[i]←d[i]/2
(8) End for
(9) End for

That is , CPU 11 reads out the values of d[i] and T[j] from memory device 13 and initializes A[i] by setting A[i] ←0. And CPU 11 performs an assignment operation represented by A[i]←A[i]*T[j] when d[i]&1 holds true, and performs an assignment operation represented by d[i]←d[i]/2 when d[i]&1 does not hold true, and stores the values of A[i] and d [i] in memory device 13.

Next, the electronic computer functions as the composition means and composes exponentiation $A^n$ using A [i] computed in step S508

[F31]

$$A^n = \prod_{i=0}^{k-1} \phi_q{}^i(A[i])$$

(step S509).

In step S509, CPU 11 performs the following algorithm.

(1) for(i=0;i<k;i++)
(2) Z←Z*$\phi_q{}^i$(A[i])
(3) End for

That is, CPU 11 reads out the values of Z and A[i] from memory device 13, performs an assignment operation from i=0 to i<k and sores the value of Z in memory device 13. CPU 11 outputs the value of Z from input/output control part 15. That is, the electronic computer functions as the output means and outputs Z as a result of the exponentiation program(step S510), and finishes the exponentiation program. Due to this operation, exponent n is divided in $\log_s n$, and hence, it is possible to reduce the number of operations of elliptic doubling approximately to $\deg D_{dmax}(a)/\deg r(a)$ using $\phi_q$.

Since $q(\chi)$, $r(\chi)$, and $s(\chi)$ are given in advance, $D_{dmax}(\chi)$ and polynomial $h(\phi_q, \chi)$ can be specified in advance, and hence, $D_{dmax}(\chi)$ and polynomial $h(\phi_q, \chi)$ may be integrated into the exponentiation program as well as $q(\chi)$, $r(\chi)$, and $s(\chi)$, or $D_{dmax}(\chi)$ and polynomial $h(\phi_q, \chi)$ may be obtained by the following auxiliary program using $r(\chi)$ and $s(\chi)$.

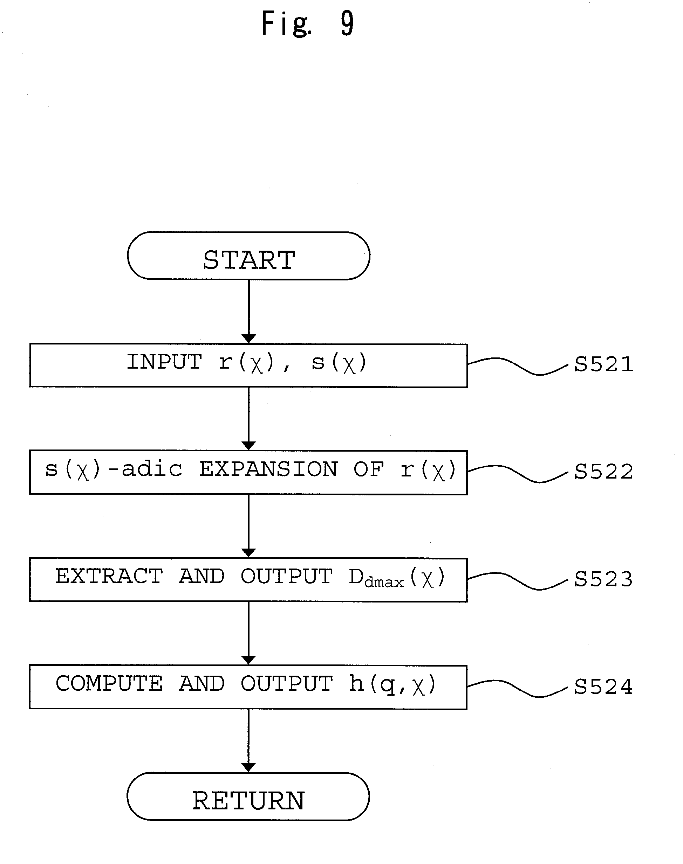

The electronic computer, starting the auxiliary program, as shown in fig.9, firstly functions as the input means. That is, CPU 11 inputs values of $r(\chi)$ and $s(\chi)$ and sores the values in memory device 13(step S521).

Next, the electronic computer functions as the expansion means and performs $s(\chi)$ -adic expansion of $r(\chi)$ using inputted $S(\chi)$

[F32]

$$r(\chi) = \sum_{i=0}^{\lceil \deg r(\chi)/\deg s(\chi) \rceil} D_i(\chi)s(\chi)^i, \ \ 0 \le \deg(D_i(\chi)) < deg(s(\chi))$$

(step S522). Here, the size of i is decided automatically by $r(\chi)$ and $s(\chi)$. In step S522, CPU 11, as a computation of s $(\chi)$-adic expansion, performs the following algorithm.

(1) for (i=0;i<$\lceil \deg(\chi)/\deg s(\chi) \rfloor$;i++)

(2) $D_i(x) \leftarrow r(\chi)\%s(\chi)$
(3) $r(\chi) \leftarrow (r(\chi)-D_i(\chi))/s(\chi)$
(4) End for

That is, CPU 11 reads out the values of $r(\chi)$ and $s(\chi)$ from memory device 13 and performs assignment operations represented by $D_i(\chi) \leftarrow r(\chi)\%s(\chi)$ and $r(\chi) \leftarrow (r(\chi)-D_i(\chi))/s(\chi)$ repeatedly from i=0 to i<⌈deg($\chi$)/degs($\chi$)⌋ and stores values of $D_i(\chi)$ and $r(\chi)$ in memory device 13.
Next, the electronic computer functions as the extraction means and extracts $D_i(\chi)$ having maximum $\deg(D_i(\chi))$ and outputs the $D_i(\chi)$ as $D_{dmax}(\chi)$ (step S523). That is, CPU 11 reads out the values of each $D_i(\chi)$ from memory device 13, compares the values, sets $D_i(\chi)$ having the maximum degree as $D_{dmax}(\chi)$ and stores the value of $D_{dmax}$ in memory device 13.
Next, the electronic computer functions as the computation means. That is, CPU 11 specifies polynomial $h(q, \chi)$ by performing a computation of

[F33]

$$h(q,\chi) = \sum_{i=0}^{\lceil \deg r(\chi)/\deg s(\chi) \rceil} D_i(\chi)\left(q^{i-dmax}\right) - D_{dmax}(\chi),$$

stores the value in memory device 13 and outputs the value (step S524). In this way, the electronic computer can obtain $D_{dmax}(\chi)$ and polynomial $h(q, \chi)$ using an auxiliary program. By the exponentiation shown in Fig. 8 using this $D_{dmax}(\chi)$ and polynomial $h(q, \chi)$ in step S501 in Fig. 8, it is possible to reduce the number of operations of elliptic doubling approximately to $\deg D_{dmax}(\chi)/\deg r(\chi)$.
Further, in the case where order q, prime order r, and difference s are specified in advance respectively as $q(\chi)$, $r(\chi)$, and $s(\chi)$ using integer variable $\chi$, and also, there exist a plurality of $D_i(\chi)$ having the maximum degree dmax among $D_i(\chi)$ represented, by performing $(t(\chi)-1)$ -adic expansion of $r(\chi)$, as

$$A^{\{r(\chi)\}} = \prod A^{\{D_i(\chi)s(\chi)^i\}} = A^{\{\sum D_i(\chi)q^i\}},$$

it is possible to speed up exponentiation of $A^n$, in which, letting coefficients of $\chi^{dmax}$ which are terms having the maximum degree dmax be $T_{dmax}(q)$, using a minimum degree polynomial $m(\chi)$ which satisfies $r(\chi)|m(\chi)$, $V(q)$ which satisfies

$$V(Q)|m(q), \quad \gcd(T_{dmax}(q),V(q))=1,$$

is specified,
integer scalar v and g(q) which satisfies

$$g(q)V(q) \equiv v(\bmod\ m(q))$$

are specified using the extended Euclidian algorithm, using a polynomial $f(q, \chi)$ and g(q) which satisfy

$$A^{\{T_{dmax}(q)\chi^{dmax}\}} = A^{\{\sum D_i(\chi)q^i - T_{dmax}(q)\chi^{dmax}\}}$$

$$= A^{\{f(q,\chi)\}},$$

based on $\phi_q^k(A)=A$, polynomial $h(q, \chi)$ which satisfies

$$A^{\{v\chi^{dmax}\}}=A^{\{g(q)f(q,\chi)\}}=A^{\{h(q,\chi)\}}$$

is specified, and a fact that a constant term h(0, χ) with respect to q of this h(q, χ) satisfies

$$A^{\{v\chi^{dmax}-h(0,\chi)\}}=A^{\{h(q,\chi)-h(0,\chi)\}}$$

is used.

That is, the number of operations is reduced, letting χ=a, s'=va$^{dmax}$-h(0,a) and h'(q)=h(q,a)-h(0,a), by performing (va$^{dmax}$-h(0,a))-adic expansion of exponent n, instead of performing $D_{dmax}$(a)-adic expansion, and by using h(q,a)-h(0,a) in place of va$^{dmax}$-h(0,a).

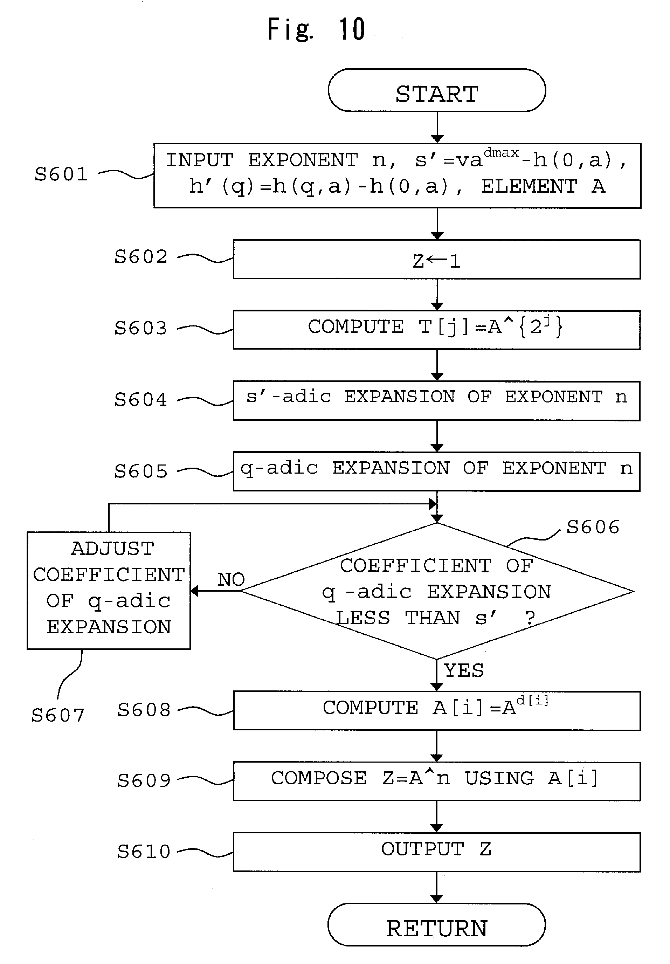

In the case of exponentiation of A$^n$ where s'=va$^{dmax}$-h(0,a) and h'(q) =h (q, a) -h (0, a) are specified, the electronic computer executes a exponentiation program and functions as an exponentiater. On this occasion, as shown in Fig.10, firstly, CPU 11 inputs values of, exponent n, letting χ =a, scalar s'=va$^{dmax}$-h(0,a) and h'(q)=h(q,a)-h(0,a), and element A∈ H⊂F$_q^k$ and stores the values in memory device 13(step S601). In this case, the electronic computer functions as the input means.

Next, the electronic computer functions as the initialization means and CPU 11 secures, in memory device 13, Z which stores a computation result and initializes Z(Z←1) (step S602). And the electronic computer functions as the first computation means and CPU 11 reads out the value of element A stored in memory device 13 and preliminarily computes A^{2$^j$} and stores the results in memory device 13(step S603). A computation in step S603 is the same as the computation in step S403 in algorithm and processings executed by CPU 11 are also the same and hence, an explanation is omitted.

Next, the electronic computer functions as the first expansion means and performs s'-adic expansion of scalar n

[F34]

$$n = \sum_{i=0}^{[\log_s n]} c[i]s'^i, \ 0 \le c[i] \le s'.$$

(step S604) . S'-adic expansion in step S604 is the same as s-adic expansion in step S404 in algorithm and processings executed by CPU 11 are also the same and hence, an explanation is omitted.

Next, the electronic computer functions as the second expansion means and performs q-adic expansion of exponent n using h'(q) and c[i]

[F35]

$$n = \sum_{i=0}^{k-1} d[i]q^i, \ 0 \le d[i] \le s$$

(step S605). The q-adic expansion in step S605 is the same as the s-adic expansion in step 5505 in algorithm other than that scalar s'(=va$^{dmax}$-h(0,a)) differs scalar s(=$D_{dmax}$(a)) in step S505 and processings executed by CPU 11 are also the same and hence, a detailed explanation is omitted.

In q-adic expansion in step S605, there is also a case where coefficient of q-adic expansion becomes larger than s'. In this way, in the case where coefficient of q-adic expansion is larger than s'(step S606:NO), CPU 11 adjusts so that coefficient of q-adic expansion becomes smaller than s' by taking a remainder of s' with respect to coefficient of q-adic expansion (step S607). This computation in step S607is the same as the computation in step S507 in algorithm other than that scalar s(=va$^{dmax}$-h(0,a)) differs scalar s(=$D_{dma}$x(a)) in step S507 and processings executed by CPU 11 are also the same and hence, a detailed explanation is omitted. Here, the electronic computer functions as the comparison means in step S606 and the adjustment means in step S607.

Next, the electronic computer functions as the second computation means and performs an operation of A[i] =A$^{d[i]}$ (step S608). Also in step S608, the binary method is used and processings in these steps executed by CPU 11 are also the same and hence, an explanation is omitted.

Next, the electronic computer functions as the composition means and composes exponentiation A$^n$ using A

[i] computed in step S608

[F36]

$$A^n = \prod_{i=0}^{k-1} \phi_q^i (A[i])$$

(step S609). A computation in step S609 is the same as the computation in step S509 in algorithm and processings in these steps executed by CPU 11 are the same and hence, an explanation is omitted.

And, the electronic computer functions as the output means and outputs Z as a result of the exponentiation program(step S610) and finishes the exponentiation program. Due to this operation, exponent n is divided in $\log_s n$ and hence, using $\phi_q$, it is possible to reduce the number of operations of elliptic doubling approximately to dmax/degr(a).

Polynomial $h(q,\chi)$ and $v\chi^{dmax}$-$h(0, \chi)$ can be specified, since order $q(\chi)$, prime order $r(\chi)$, and difference $s(\chi)$ are given in advance and hence, polynomial $h(q, \chi)$ and $v\chi^{dmax}$-$h(0, \chi)$ as well as $q(\chi)$, $r(\chi)$, and $s(\chi)$ may be integrated into an exponentiation program, or polynomial $h(q, \chi)$ and $v\chi^{dmax}$-$h(0, \chi)$ may be obtained by an auxiliary program using $r(\chi)$ and $s(\chi)$.

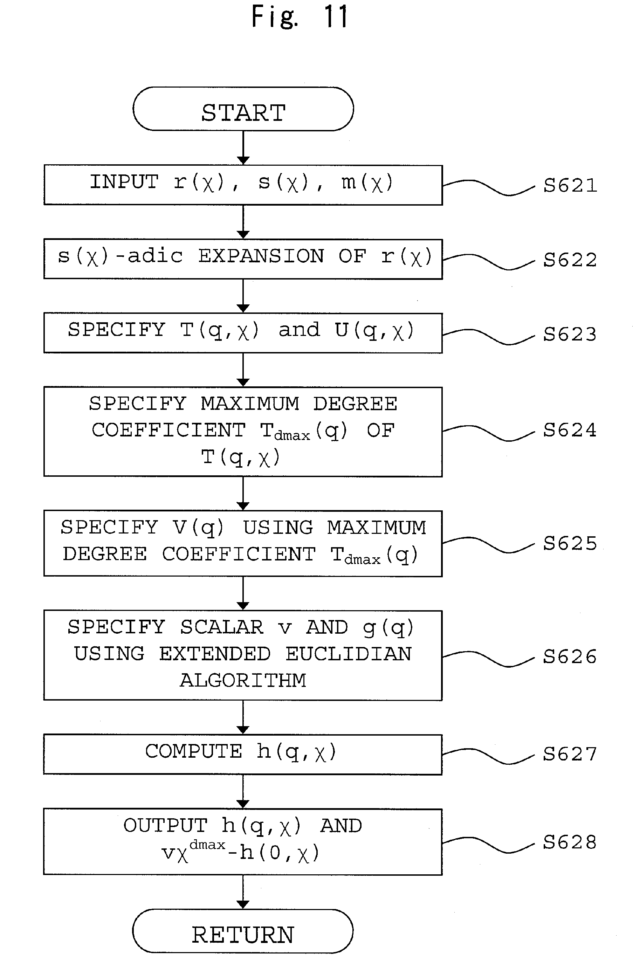

The electronic computer, by starting the auxiliary program, as shown in Fig 11, firstly functions as the input means. CPU 11 stores values of inputted $r(\chi)$, $s(\chi)$, and $m(\chi)$ in memory device 13(step S621). Here, $m(\chi)$ is the minimum degree polynomial which satisfies $r(\chi)|m(\chi)$ and in general, a cyclotomic polynomial is used as m(x).

Next, the electronic computer functions as the expansion means and performs $s(\chi)$ -adic expansion of $r(\chi)$ using inputted $s(\chi)$

[F37]

$$r(\chi) = \sum_{i=0}^{\lceil \deg r(\chi)/\deg s(\chi)\rceil} D_i(\chi)s(\chi)^i, \ 0 \le \deg(D_i(\chi)) < deg(s(\chi))$$

(step S622). Here, the size of i is decided automatically by $r(\chi)$ and $S(\chi)$. In step S622, the electronic computer, as a computation of $s(\chi)$-adic expansion, performs the following algorithm.

(1) for(i=0;i<⌈degr(χ)/degs(χ)⌋;i++)
(2) $D_i(\chi)\leftarrow r(\chi)\%s(\chi)$
(3) $r(\chi)\leftarrow(r(\chi)-D_i(\chi))/s(\chi)$
(4) End for

That is, CPU 11 reads out the values of $r(\chi)$ and $\chi$ from memory device 13 and performs assignment operations represented by $D_i(\chi)\leftarrow r(\chi)\%s(\chi)$ and $r(\chi)\leftarrow(r(\chi)-D_i(\chi))/s(\chi)$ repeatedly from i=0 to i<⌈degr(χ)/degs(χ)⌋ and store the values of $D_i(\chi)$ and $r(\chi)$ in memory device 13.

Next, the electronic computer functions as the first specifying means and extracts coefficient of $\chi^{dmax}$ which are terms having the maximum degree dmax of $\deg(D_i(\chi))$ and sets a sum of extracted coefficients as $T(q, \chi)$ and sets a sum of coefficients other than that as $U(q, \chi)$ (step S623) . In step S623, the electronic computer concretely performs the following algorithm.

(1) for (i=0;i<⌈degr(χ)/degs(χ)⌋;i++)
(2) $T(q,\chi)\leftarrow 0$, $U(q,\chi)\leftarrow 0$
(3) if (deg($D_i\chi$))=dmax)
(4) $T(q, \chi)\leftarrow T(q, \chi)+D_i(\chi)q^i$
(5) End if
(6) else
(7) $U(q, \chi)\leftarrow(q, \chi)+D_i(\chi)q^i$
(8) End else
(9) End for

That is, CPU 11 reads out the values of $r(\chi)$, $s(\chi)$, and $D_i(\chi)$. And after initializing $T(q, \chi)\leftarrow 0$ and $U(q, \chi)\leftarrow 0$, CPU 11 performs ,when deg($D_i(\chi)$)=dmax holds true, an assignment operation represented by $T(q, \chi)\leftarrow T(q,\chi)+D_i(\chi)q^i$ and when deg($D_i(\chi)$)=dmax does not hold true, an assignment operation represented by $U(q, \chi) \leftarrow U(q, \chi) +D_i(\chi)q^i$

repeatedly from i=0 to i<⌈degr(χ)/degs(χ)⌋ and stores the values of T(q, χ) and U(q, χ) in memory device 13.

Next, the electronic computer functions as the second specifying means. CPU 11 specifies the maximum degree coefficient $T_{dmax}(q)$ among T(q, χ) specified in step S623 and stores $T_{dmax}(q)$ in memory device 13(step S624).

Next, the electronic computer functions as the third specifying means and specifies V(q) which satisfies

$$\mathrm{V(q)\,|\,m(q),\ \ gcd(T_{dmax}(q),V(q))=1}$$

using maximum degree coefficient $T_{dmax}(q)$ specified in step S624(step S625). In step S625, the electronic computer concretely performs the following algorithm.

(1) W(q)←gcd($T_{dmax}$(q),m(q))
(2) V(q)←W(q)

That is, CPU 11 reads out the values of $T_{dmax}(q)$ and m(q) from memory device 13 and performs assignment operations represented by W(q)←gcd($T_{dmax}$(q),m(q)) and V(q)←W(q) and stores the values of W(q) and V(q) in memory device 13.

Next, the electronic computer functions as the fourth specifying means. that is, CPU 11 reads out V(q) specified in step s625 from memory device 13 and specifies scalar v and g(q) which satisfy

$$\mathrm{g(q)V(q)\equiv v(mod\ m(q)}$$

using the extended Euclidian algorithm and stores scalar v and g(q) in memory device 13(step S626). This extended Euclidian algorithm is executed based on a known program prepared in a general library and particularly it is desirable to set coefficient of g(q) and scalar v to be small. Next, the electronic computer reads out g(q) specified in step S626 from memory device 13 and specifies polynomial h(q, χ) by performing a computation of

[F38]

$$h(q,\chi) = g(q)\left(T(q,\chi) - T_{dmax}(q)\chi^{dmax} + U(q,\chi)\right)\mathrm{mod}q^{k} - 1$$

(step S627), and stores the values of polynomial h(q, χ) and $v\chi^{dmax}$ -h(0, χ) in memory device 13 and outputs the values (step S628). In this way, the electronic computer can obtain polynomial h(q, χ) and $v\chi^{dmax}$ -h(0, χ) using an auxiliary program. In this case, the electronic computer functions as the computing means in step S627 and functions as the output means in step S628. Using this $v\chi^{dmax}$ -h(0, χ) and polynomial h(q, χ) in step S 601 in Fig.10, by exponentiation shown in Fig.10, it is possible to reduce the number of operations of elliptic doubling approximately to dmax/degr(χ).

**Claims**

1. A computation method for scalar multiplication, in which an elliptic curve is assumed to be

$$\mathrm{E/F_q = x^3 + ax + b - y^2 = 0,\ \ a \in F_q,\ \ b \in F_q,}$$

letting: $E(F_q)$ be an additive group constituted of rational points on the elliptic curve defined over a finite field $F_q$;

$E(F_q{}^k)$ be an additive group constituted of rational points on the elliptic curve defined over an extension field $F_q{}^k$ of the finite field $F_q$;
$\phi_q$ be a Frobenius endomorphism of a rational point with respect to the finite field $F_q$;
t be a trace of the Frobenius endomorphism $\phi_q$;
r be a prime order which divides an order of $E(F_q)$, #$E(F_q)$=q+1-t;
E[r] be a set of rational points having an order of the prime number r;

[j] be a mapping which multiplies a rational point by j; and
G be a set of rational points contained in $E(F_q^k)$ which satisfy

$$G=E[r] \cap Ker(\phi_q-[q]),$$

an electronic computer including a CPU and a memory means computes a scalar multiplication by n of a rational point Q in G with respect to a non-negative integer n,
the computation method for scalar multiplication comprising:
an input step where the CPU inputs values of the non-negative integer n, the trace t, and a rational point Q represented by $Q \in G \subset E(F_q^k)$ and stores the values in the memory means;
an initialization step where the CPU initializes the memory means which stores a computation result Z;
an expansion step where, since

$$\phi_q(Q)=[q]Q=[t-1]Q$$

holds true with respect to a rational point Q in G, letting s=t-1, based on the following formula in which s-adic expansion of said n is performed,

[F39]

$$n = \sum_i c[i]s^i, \ 0 \le c[i] \le s$$

the CPU performs assignment operations represented by c[i] ←n%s and n←(n-c[i]) /s repeatedly from i=0 predetermined times and stores the values of each coefficient c[i] and the non-negative integer n in the memory means;
a computation step where the CPU reads out the rational point Q and the coefficient c[i] from the memory means and performs an assignment operation represented by Q[i]=c[i]Q repeatedly from i=0 predetermined times and stores the values of each Q[i] in the memory means; and
a composition step where, based on the following formula of scalar multiplication nQ represented by using the Frobenius endomorphism $\phi_q$ with respect to a rational point in place of t-1,

[F40]

$$nQ = \sum_i \phi_q^i(Q[i])$$

the CPU reads out Q[i] and the computation result Z from the memory means and performs an assignment operation represented by $Z \leftarrow Z+\phi_q^i(Q[i])$ repeatedly from i=0 predetermined times and stores the computation result Z of the scalar multiplication in the memory means.

2. The computation method for scalar multiplication according to claim 1, wherein the order q of the finite field $F_q$ of the elliptic curve, the prime order r which divides #E($F_q$), and the trace t of the Frobenius endomorphism $\phi_q$ are given respectively as q(χ), r(χ), and t(χ) using an integer variable χ,
the computation method for scalar multiplication further comprising:

an auxiliary input step where the CPU inputs respective values of the q(χ), r(χ), and t(χ) and stores the values in the memory means;
an auxiliary expansion step where the CPU reads out the values of the r(χ) and t(χ) from the memory means and, letting the s(χ)=t(χ)-1, based on the following formula in which s(χ)-adic expansion of r(χ) is performed,

[F41]

$$r(\chi) = \sum_{i=0}^{\lceil \deg r(\chi)/\deg s(\chi) \rceil} D_i(\chi)s(\chi)^i, \ 0 \le \deg(D_i(\chi)) < deg\left(s(\chi)\right)$$

performs assignment operations represented by $D_i(\chi) \leftarrow r(\chi)\%s(\chi)$ and $r(\chi) \leftarrow (r(\chi)-D_i(\chi))/s(\chi)$ repeatedly from $i=0$ to $i < \lfloor \deg r(\chi)/\deg s(\chi) \rfloor$ and stores the values of each coefficient $D_i(\chi)$ and $r(\chi)$ in the memory means;
an auxiliary extraction step where the CPU extracts $D_i(\chi)$ having the maximum $\deg(D_i(\chi))$ among the stored coefficients $D_i(\chi)$ as $D_{dmax}(\chi)$ and stores the $D_{dmax}(\chi)$ in the memory means;
an auxiliary specifying step where the CPU reads out the values of $D_{dmax}(\chi)$, $D_i(\chi)$, and Q from the memory means and, using a polynomial $f(\phi_q, \chi)$ which satisfies

$$\phi_q^{dmax}([D_{dmax}(\chi)]Q) = \sum \phi_q^i([D_i(\chi)]Q - \phi_q^{dmax}([D_{dmax}(\chi)]Q)$$

$$= [f(\phi_q, \chi)]Q \ ,$$

, based on $\phi_q^k Q = Q$, specifies a polynomial $h(\phi_q, \chi)$ which satisfies

$$[D_{dmax}(\chi)]Q = [f(\phi_q, \chi) \phi_q^{-dmax}]Q = h(\phi_q, \chi)]Q$$

and stores the value of the polynomial $h(\phi_q, \chi)$ in the memory means; and
a step where the CPU , letting $\chi=a$, replaces the s-adic expansion with $D_{dmax}(a)$-adic expansion with $S=D_{dmax}(a)$ and uses the polynomial $h(\phi_q, a)$ in place of said $D_{dmax}(a)$.

3.  The computation method for scalar multiplication according to claim 2, wherein there exist a plurality of coefficients $D_i(\chi)$ having the maximum degree dmax in the coefficients $D_i(\chi)$ and the auxiliary input step further includes a step where the CPU inputs a value of m(x) which satisfies $r(\chi)|m(\chi)$ and stores the value in the memory means,
the computation method for scalar multiplication further comprising:

a second auxiliary specifying step where the CPU, letting coefficient of $\chi^{dmax}$ which are terms having maximum degree dmax of $\deg(D_i(\chi))$ be $T_{dmax}(\phi_q)$, reads out coefficient $D_i(\chi)$ from the memory means, allocates $T(\phi_q, \chi)$ and $U(\phi_q, \chi)$ with initial values of 0 in the memory means, performs , when $\deg(D_i(\chi))$ =dmax holds true, an assignment operation represented by $T(\phi_q, \chi) \leftarrow T(\phi_q,\chi)+D_i(\chi)\phi_q^i$, and when otherwise, an assignment operation represented by $U(\phi_q, \chi) \leftarrow U(\phi_q, \chi)+D_i(\chi)\phi_q^i$ repeatedly from $i=0$ to $i < \lfloor \deg r(\chi)/\deg s(\chi) \rfloor$, stores the values of $T(\phi_q, \chi)$ and $U(\phi_q, \chi)$ in the memory means and specifies a maximum degree coefficient $T_{dmax}(\phi_q)$;
a third auxiliary specifying step where the CPU reads out the values of $m(\chi)$ and $R(\chi)$ from the memory means, using the minimum degree polynomial $m(\chi)$ which satisfies $r(\chi)|m(\chi)$, specifies $V(\phi_q)$ which satisfies

$$V(\phi_q)|m(\phi_q), \ \gcd(T_{dmax}(\phi_q),V(\phi_q))=1$$

by performing assignment operations represented by $W(\phi_q) \leftarrow \gcd(T_{dmax}(\phi_q),m(\phi_q))$ and $V(\phi_q) \leftarrow W(\phi_q)$, and stores the value of said $V(\phi_q)$ in the memory means;
a fourth auxiliary specifying step where the CPU reads out the values of $V(\phi_q)$ and $m(\phi_q)$ from the memory means, specifies integer scalar v and $g(\phi_q)$ which satisfies

$$g(\phi_q)V(\phi_q) \equiv v(\mathrm{mod}\ m(\phi_q))$$

by performing an extended Euclidian algorithm and stores the values of scalar v and $g(\phi_q)$ in the memory means;

a fifth auxiliary specifying step where, in place of the auxiliary specifying step, the CPU reads out each value of $T_{dmax}(\phi_q)$, $\chi^{dmax}$, $D_i(\chi)$ and Q from the memory means, using a polynomial $f(\phi_q, \chi)$ which satisfies

$$[T_{dmax}(\phi_q)\chi^{dmax}]Q = \sum \phi_q^i([D_i(\chi)]Q) - [T_{dmax}(\phi_q)\chi^{dmax}]Q$$

$$= [f(\phi_q, \chi)]Q$$

and said $g((\phi_q)$, based on $\phi_q^kQ=Q$, specifies a polynomial $h(\phi_q, \chi)$ which satisfies

$$[v\chi^{dmax}]Q = [g(\phi_q)f(\phi_q, \chi)]Q = [h(\phi_q, \chi)]Q ,$$

, and stores the value of the polynomial $h(\phi_q, \chi)$ in the memory means; and
a step where the CPU reads out the value of said $h(\phi_q, \chi)$ from the memory means, using a constant term $h(0, \chi)$ of $h(\phi_q, \chi)$ with respect to $\phi_q$ which satisfies

$$[v\chi^{dmax} - h(0, \chi)]Q = [h(\phi_q, \chi) - h(0, \chi)]Q,$$

performs, letting $\chi=a$, assignment operations represented by $s'=va^{dmax}-h(0,a)$ and $h'(\phi_q)=h(\phi_{q,a})-h(0,a)$, stores the value of s' and $h'(\phi_q)$ in the memory means, performs $(va^{dmax}-h(0, a)$ -adic expansion of said n which has been performed (t-1)-adic expansion instead of performing $D_{dmax}(a)$-adic expansion, and uses $h(\phi_q,a)-h(0,a)$ in place of $va^{dmax}-h(0,a)$.

4. A computation method for exponentiation, in which, letting :

$F_q^k$ be a k-th extension field of a finite field $F_q$ of an order q;
H be a multiplicative subgroup of $F_q^k$ of a prime order r; and
$\phi_q$ be a Frobenius endomorphism of an element with respect to the finite field $F_q$,
an electronic computer including a CPU and a memory means computes exponentiation of an element A in H to the power of n with respect to a non-negative integer n,
the computation method for exponentiation comprising:
an input step where the CPU inputs a value of the non-negative integer n, a value of the order q, a value of the prime order r of said $F_q^k$, and a value of the element A represented by $A \in =H \subset F_q^k$ and stores the values in the memory means;
an initialization step where the CPU initializes the memory means which stores a computation result Z;
a first computation step where the CPU reads out the values of the order q and the element A from the memory means, letting difference of said q and r be s=q-r, performs assignment operations represented by $T[j] \leftarrow A$ and $A \leftarrow A*A$ repeatedly from j=0 to $j<\lceil log_2 s \rceil$, and stores the values of said $T[j]$ and said A in the memory means;
an expansion step where the CPU reads out the values of said n and the difference s from the memory means, based on the following formula
which is expanded using the difference s,

[F42]

$$n = \sum_i c[i]s^i, \; 0 \leq c[i] \leq s$$

performs assignment operations represented by $c[i] \leftarrow n\%s$ and $n \leftarrow (n-c[i])/s$ repeatedly from i=0 predetermined times, and stores the values of each coefficient c[i] and the non-negative integer n in the memory means;
a second computation step where the CPU reads out the values of c[i] and said n from the memory means, based on $A[i]=A^{c[i]}$, initializes A[i]=1, when c[i]&1 holds true, performs assignment operations represented by $A[i] \leftarrow A[i]*T[j]$ and $c[i] \leftarrow c[i]/2$ repeatedly from i=0 predetermined times, and stores values of A[i] and c[i] in the memory means; and
a composition step where the CPU reads out each A[i] from the memory means, based on the following formula

[F43]

$$A^n = \prod_i \phi_q{}^i (A[i]),$$

performs an exponentiation operation represented by $Z \leftarrow Z^* \phi_q{}^i A[i])$ repeatedly from i=0 predetermined times, and stores the computation result as Z in the memory means.

5. The computation method for exponentiation according to claim 4, wherein, letting X^{Y} denote $X^Y$, the order q, the prime order r, and said s are given respectively as $q(\chi)$, $r(\chi)$, and $s(\chi)$ using an integer variable $\chi$, the computation method for exponentiation further comprising:

an auxiliary input step where the CPU inputs each value of said $q(\chi)$, $r(\chi)$, and $s(\chi)$ and stores the values in the memory means;
an auxiliary expansion step where the CPU reads out the values of $r(\chi)$ and $s(\chi)$ from the memory means, based on the following formula in which $s(\chi)$-adic expansion of said $r(\chi)$ is performed using said $s(\chi)$

[F44]

$$r(\chi) = \sum_{i=0}^{\lceil \deg r(\chi)/\deg s(\chi) \rceil} D_i(\chi) s(\chi)^i, \ \ 0 \le \deg(D_i(\chi)) < deg(s(\chi))$$

performs assignment operations represented by $D_i(\chi) \leftarrow r(\chi)\%s(\chi)$ and $r(\chi) \leftarrow (r(\chi)-D_i(\chi))/s(\chi)$ repeatedly from i=0 to i<$\lceil degr(\chi)/degs(\chi) \rfloor$, and stores the values of the coefficient $D_i(\chi)$ and said $r(\chi)$ in the memory means;
an auxiliary extraction step where the CPU extracts $D_i(\chi)$ having the maximum deg($D_i(\chi)$) among the stored coefficients Di$(\chi)$ as $D_{dmax}(\chi)$ and stores the $D_{dmax}(\chi)$ in the memory means;
an auxiliary specifying step where the CPU reads out the values of said $D_{dmax}(\chi)$, $D_i(\chi)$, and q, using a polynomial f (q, $\chi$) which satisfies

$$(A\verb|^|\{D_{dmax}(\chi)\})\verb|^|\{q^{dmax}\}=A\verb|^|\{\sum_{i \ne dmax}-D_i(\chi)q^i\}=A\verb|^|\{f(q,\chi)\},$$

based on $\phi_i{}^k(A)=A$,
specifies a polynomial h(q, $\chi$) which satisfies

$$A\verb|^|\{D_{dmax}(\chi)\}=A\verb|^|\{\sum_{i \ne dmax}-D_i(\chi)q^i-q^{dmax}\}=A\verb|^|\{h(q,\chi)\},$$

, and stores the value of the polynomial h(q, $\chi$) in the memory means; and
a step where the CPU , letting $\chi$ =a, replaces s-adic expansion of said n with $D_{dmax}(a)$-adic expansion with s=$D_{dmax}(a)$ and uses the polynomial h($\phi_q$,a) in place of said $D_{dmax}(a)$.

6. The computation method for exponentiation according to claim 5, wherein, there exist a plurality of coefficients $D_i$($\chi$) having the maximum degree dmax in the coefficients $D_i(\chi)$, and the auxiliary storage step further includes a step where the CPU inputs a value of m($\chi$) which satisfies $r(\chi)|m(\chi)$ and stores the value in the memory means, the computation method for exponentiation further comprising:

a second auxiliary specifying step where the CPU, letting coefficients of $\chi^{max}$ which are terms having the maximum degree dmax of deg($D_i(\chi)$) be $T_{dmax}(q)$, reads out coefficient $D_i(\chi)$ from the memory means, allocates

$T(q,x)$ and $U(q, \chi)$ with initial values of 0 in the memory means, performs, when deg $(D_i(\chi))$ =dmax holds true, an assignment operation represented by $T(q, \chi) \leftarrow T(q, \chi) + D_i(\chi)q^i$, and when otherwise, an assignment operation represented by $U(q, \chi) \leftarrow U(q, \chi) + D_i(\chi)q^i$ repeatedly from i=0 to i<⌈degr($\chi$)/degs($\chi$)⌋, stores the values of $T(q, \chi)$ and $U(q,$

$\chi$) in the memory means and specifies a maximum degree coefficient $T_{dmax}(q)$;

a third auxiliary specifying step where the CPU reads out the values of $m(x)$ and $R(\chi)$ from the memory means, using a minimum degree polynomial $m(\chi)$ which satisfies $r(\chi)|m(\chi)$, specifies $V(q)$ which satisfies

$$V(q)|m(q), \quad gcd(T_{dmax}(q), V(q))=1$$

by performing assignment operations represented by $W(q) \leftarrow gcd(T_{dmax}(q), m(q))$ and $V(q) \leftarrow W(q)$, and stores the value of said $V(q)$ in the memory means;

a fourth auxiliary specifying step where the CPU reads out the values of $V(q)$ and $m(q)$ from the memory means, specifies an integer scalar v and $g(q)$ which satisfy

$$g(q)V(q) \equiv v \pmod{m(q)}$$

by performing an extended Euclidian algorithm, and stores the values of the scalar v and $g(q)$ in the memory means;

a fifth auxiliary specifying step where, in place of the auxiliary specifying step, the CPU reads out each value of $T_{dmax}(q)$, $\chi^{dmax}$, $D_i(\chi)$, using a polynomial $f(q, \chi)$ which satisfies

$$A^{\{T_{dmax}(q) \chi^{dmax}\}}=A^{\{\sum D_i(\chi)q^i - T_{dmax}(q) \chi^{dmax}\}}$$

$$=A^{\{f(q, \chi)\}}$$

and said $g(q)$, based on $\phi_q{}^k(A) = A$, specifies a polynomial $h(q, \chi)$ which satisfies

$$A^{\{v \chi^{dmax}\}}=A^{\{g(q)f(q, \chi)\}}=A^{\{h(q, \chi)\}},$$

, and stores the value of the polynomial $h(q, \chi)$ in the memory means; and

a step where the CPU reads out the value of $h(q, \chi)$ from the memory means, using a constant term $h(0, \chi)$ of $h(q, \chi)$ with respect to q which satisfies

$$A^{\{v \chi^{dmax} - h(0, \chi)\}}=A^{\{h(q, \chi) - h(0, \chi)\}}$$

performs, letting $\chi = a$, assignment operations represented by $s' = va^{dmax} - h(0,a)$ and $h'(q) = h(q,a) - h(0,a)$, stores values of s' and $h'(q)$ in the memory means, performs $(va^{dmax} - h(0,a))$-adic expansion of said n which has been performed s-adic expansion instead of performing $D_{dmax}(a)$-adic expansion and uses $h(q,a) - h(0,a)$ in place of $va^{dmax} - h(0,a)$.

7. A computer readable recording medium recording a scalar multiplication program, in which an elliptic curve is assumed to be $E/F_q = x^3 + ax + b - y^2 = 0$, $a \in F_q$, $b \in F_q$, letting:

$E(Fq)$ be an additive group constituted of rational points on the elliptic curve defined over a finite field $F_q$;

$E(F_q{}^k)$ be an additive group constituted of rational points on the elliptic curve defined over an extension field $F_q{}^k$ of the finite field $F_q$;

$\phi_q$ be a Frobenius endomorphism of a rational point with respect to the finite field $F_q$;

t be a trace of the Frobenius endomorphism $\phi_q$;
r be a prime order which divides an order of $E(F_q)$, $\#E(F_q)=q+1-t$;
E[r] be a set of rational points having an order of the prime number r;
[j] be a mapping which multiplies a rational point by j; and
G be a set of rational points in $E(F_q{}^k)$ which satisfy

$$G=E[r] \cap Ker(\phi_q-[q]),$$

an electronic computer including a CPU and a memory means is caused to perform a scalar multiplication by n of a rational point Q in G with respect to a non-negative integer n,
the scalar multiplication program causing the electronic computer to perform:
an input procedure where the electronic computer inputs a value of the non-negative integer n, a value of the trace t, and a rational point Q represented by $Q\in G\subset E(F_q{}^k)$ and stores the values in the memory means;
an initialization procedure where the electronic computer initializes the memory means which stores a computation result Z;
an expansion procedure where, since

$$\phi_q(Q)=[q]Q=[t-1]Q$$

holds true with respect to a rational point Q in G, letting s=t-1, based on the following formula in which s-adic expansion of said n is performed,

[F45]

$$n = \sum_i c[i]s^i, \ 0 \le c[i] \le s$$

the electronic computer performs assignment operations represented by $c[i]\leftarrow n\%s$ and $n\leftarrow(n-c[i])/s$ repeatedly from i=0 predetermined times and stores the values of each coefficient c[i] and the non-negative integer n in the memory means;
a computation procedure where the electronic computer reads out the rational point Q, the non-negative integer n, and the coefficient c[i] from the memory means and performs an assignment operation represented by Q[i] =c[i]Q repeatedly from i=0 predetermined times and stores the values of each Q[i] in the memory means; and
a composition procedure where, based on the following formula of scalar multiplication nQ represented by using the Frobenius endomorphism $\phi_q$ with respect to a rational point in place of t-1,

[F46]

$$nQ = \sum_i \ \phi_q{}^i(Q[i])$$

the electronic computer reads out Q[i] and the computation result Z from the memory means and performs an assignment operation represented by $Z\leftarrow Z+\phi_q{}^i(Q[i])$ repeatedly from i=0 predetermined times and stores the computation result Z of the scalar multiplication in the memory means.

8. The computer readable recording medium recording a scalar multiplication program according to claim 7, wherein the order q of the finite field $F_q$ of the elliptic curve, the prime order r which divides $\#E(F_q)$, and the trace t of the Frobenius endomorphism $\phi_q$ are given respectively as $q(\chi)$, $r(\chi)$, and $t(\chi)$ using an integer variable $\chi$, the scalar multiplication program causing the electronic computer to perform:

an auxiliary input procedure where the electronic computer inputs each value of the $q(\chi)$, $r(\chi)$, and $t(\chi)$ and stores the values in the memory means;
an auxiliary expansion procedure where the electronic computer reads out the values of the $r(\chi)$ and $t(\chi)$ from

the memory means and, letting said s($\chi$)=t($\chi$)-1, based on the following formula in which s($\chi$)-adic expansion of r($\chi$) is performed,

[F47]

$$r(\chi) = \sum_{i=0}^{\lceil \deg r(\chi)/\deg s(\chi) \rceil} D_i(\chi)s(\chi)^i, \ 0 \leq \deg(D_i(\chi)) < deg\left(s(\chi)\right)$$

performs assignment operations represented by $D_i(\chi) \leftarrow r(\chi)\%s(\chi)$ and $r(\chi) \leftarrow (r(\chi)-D_i(\chi))/s(\chi)$ repeatedly from i=0 to i<⌈degr($\chi$)/degs($\chi$)⌋ and stores the values of each coefficient $D_i(\chi)$ and $r(\chi)$ in the memory means;
an auxiliary extraction procedure where the electronic computer extracts $D_i(\chi)$ having the maximum deg ($D_i(\chi)$) among the stored coefficients $D_i(\chi)$ as $D_{dmax}(\chi)$ and stores said $D_{dmax}(\chi)$ in the memory means;
an auxiliary specifying procedure where the electronic computer reads out the values of $D_{dmax}(\chi)$, $D_i(\chi)$, and Q, using a polynomial $f(\phi_q, \chi)$ which satisfies

$$\phi_q^{dmax}([D_{dmax}(\chi)]Q) = \Sigma \phi_q^i([D_i(\chi)]Q) - \phi_q^{dmax}([D_{dmax}(\chi)]Q)$$

$$=[f(\phi_q, \chi)]Q \ ,$$

, based on $\phi_i{}^kQ=Q$, specifies a polynomial $h(\phi_q, \chi)$ which satisfies

$$[D_{dmax}(\chi)]Q = [f(\phi_q, \chi)\phi_q^{-dmax}]Q = h(\phi_q, \chi)]Q$$

and stores the value of the polynomial $h(\chi_q, \chi)$ in the memory means; and
a procedure where the electronic computer , letting $\chi$ =a, replaces the s-adic expansion with $D_{dmax}(a)$-adic expansion with $s=D_{dmax}(a)$ and uses the polynomial $h(\phi_q, a)$ in place of said $D_{dmax}(a)$.

9. The computer readable recording medium recording a scalar multiplication program according to claim 8, wherein there exist a plurality of coefficients $D_i(\chi)$ having the maximum degree dmax in the coefficients $D_i(\chi)$, and the auxiliary input procedure further includes a procedure where the electronic computer inputs a value of m($\chi$) which satisfies r($\chi$)|m($\chi$) and stores the value in the memory means,
the scalar multiplication program causing the electronic computer to perform:

a second auxiliary specifying procedure where the electronic computer, letting coefficient of $\chi^{dmax}$ which are terms having maximum degree dmax of deg ($D_i(\chi)$) be $T_{dmax}(\phi_q)$, reads out the values of coefficient $D_i(\chi)$ from the memory means, allocates $T(\phi_q, \chi)$ and $U(\phi_q, \chi)$ with initial values of 0 in the memory means, performs an assignment operation, when deg$D_i(\chi)$) =dmax holds true, represented by $T(\phi_q, \chi) \leftarrow T(\chi_q, \chi)+D_i(\chi)\phi_q^i$ and when otherwise, represented by $U(\phi_q, \chi) \leftarrow U(\chi_q, \chi) +D_i(\chi)\phi_q^i$ repeatedly from i=0 to i<⌈degr($\chi$)/degs($\chi$)⌋, stores the values of $T(\phi_q, \chi)$ and $U(\phi_q, \chi)$ in the memory means and specifies the maximum degree coefficient $T_{dmax}(\phi_q)$;
a third auxiliary specifying procedure where the electronic computer reads out the values of m($\chi$) and r($\chi$) from the memory means, using the minimum degree polynomial m(x) which satisfies r($\chi$)|m($\chi$), specifies $V(\phi_q)$ which satisfies

$$V(\phi_q)|m(\phi_q), \ gcd(T_{dmax}(\phi_q),V(\phi_q))=1$$

by performing assignment operations represented by $W(\phi_q) \leftarrow gcd(T_{dmax}(\phi_q), m(\phi_q))$ and $V(\phi_q) \leftarrow W(\phi_q)$, and stores the value of said $V(\phi_q)$ in the memory means;

a fourth auxiliary specifying procedure where the electronic computer reads out the values of $V(\phi_q)$ and $m(\phi_q)$, specifies an integer scalar v and $g(\phi_q)$ which satisfy

$$g(\phi_q)V(\phi_q) \equiv v(\mathrm{mod}\ m(\phi_q))$$

by performing an extended Euclidian algorithm and stores the values of scalar v and $g(\phi_q)$ in the memory means; a fifth auxiliary specifying procedure where, in place of the auxiliary specifying step, the electronic computer reads out each value of $T_{dmax}(\phi_q)$, $\chi^{max}$, $D_i(\chi)$ and Q, using a polynomial $f(\phi_q, \chi)$ which satisfies

$$[T_{dmax}(\phi_q)\chi^{dmax}]Q = \Sigma\ \phi_q^{\ i}([D_i(\chi)]Q) - [T_{dmax}(\phi_q)\chi^{dmax}]Q$$

$$= [f(\phi_q, \chi)]Q$$

and said $g(\phi_q)$, based on $\phi_q^k Q=Q$, specifies o polynomial $h(\phi_q, \chi)$ which satisfies

$$[v\chi^{dmax}]Q = [g(\phi_q)f(\phi_q, \chi)]Q = [h(\phi_q, \chi)]Q\ ,$$

, and stores the value of the polynomial $h(\phi_q, \chi)$ in the memory means; and a procedure where the electronic computer reads out the value of said $h(\phi_q, \chi)$ from the memory means, using a constant term $h(0, \phi)$ of $h(\phi_q, \chi)$ with respect to $\phi_q$ which satisfies

$$[v\chi^{dmax}-h(0, \chi)]Q = [h(\phi_q, \chi)-h(0, \chi)]Q,$$

performs, letting $\chi=a$, assignment operations represented by $s'=va^{dmax}-h(0, a)$ and $h'(\phi_q)=h(\phi_q, a)-h(0, a)$, stores the values of s' and $h'(\phi_q)$ in the memory means, performs $(va^{dmax}-h(0,a)$-adic expansion of said n which is performed (t-1)-adic expansion instead of performing $D_{dmax}(a)$-adic expansion, and uses $h(\phi_q,a)-h(0,a)$ in place of $va^{damx}-h(0,a)$.

**10.** A computer readable recording medium recording an exponentiation program, in which, letting :

$F_q^k$ be a k-th extension field of a finite field $F_q$ of an order q;
H be a multiplicative subgroup of $F_q^k$ of a prime order r; and
$\phi_q$ be a Frobenius endomorphism of an element with respect to the finite field $F_q$,
an electronic computer including a CPU and a memory means is caused to perform exponentiation of an element A in H to the power of n with respect to a non-negative integer n,
the exponentiation program causing the electronic computer to perform:
an input procedure where the electronic computer inputs a value of the non-negative integer n, a value of the order q, a value of the prime order r of said $F_q^k$, and a value of an element A represented by $A \in H \subset F_q^k$ and stores the values in the memory means;
an initialization procedure where the electronic computer initializes the memory means which stores a computation result Z;
a first computation procedure where the electronic computer reads out the values of the order q and the element A from the memory means, letting difference of said q and r be s=q-r, performs assignment operations represented by $T[j] \leftarrow A$ and $A \leftarrow A*A$ repeatedly from j=0 to $j < \lceil \log_2 s \rceil$, and stores the values of said T[j] and said A in the memory means;
an expansion procedure where the electronic computer reads out the values of said n and the difference s, based on the following formula
which is expanded using difference s,

[F48]

$$n = \sum_i c[i]s^i, \ 0 \le c[i] \le s$$

performs assignment operations represented by $c[i] \leftarrow n\%s$ and $n \leftarrow (n-c[i])/s$ repeatedly from i=0 predetermined times, and stores the values of each coefficient c[i] and the non-negative integer n in the memory means;

a second computation procedure where the electronic computer reads out the values of c[i] and said n, based on $A[i]=A^{c[i]}$, initializes A[i]=1, when c[i]&1 holds true, performs assignment operations represented by $A[i] \leftarrow A[i]*T[j]$ and $c[i] \leftarrow c[i]/2$ repeatedly from i=0 predetermined times, and stores the values of A[i] and c[i] in the memory means; and

a composition procedure where the electronic computer reads out the values of each A[i] from the memory means, based on the following formula,

[F49]

$$A^n = \prod_i \phi_q^{\ i}(A[i])$$

performs an assignment operation represented by $Z \leftarrow Z*\phi_q^i(A[i])$ repeatedly from i=0 predetermined times, and stores the computation result as Z in the memory means.

11. The computer readable recording medium recording an exponentiation program according to claim 10, wherein, letting X^{Y} denote $X^Y$, the order q, the prime order r, and said s are given respectively as $q(\chi)$, $r(\chi)$, and $s(\chi)$ using an integer variable $\chi$,
the exponentiation program causing the electronic computer to further perform:

an auxiliary input procedure where the electronic computer inputs each value of said $q(\chi)$, $r(\chi)$, and $s(\chi)$ and stores the values in the memory means;
an auxiliary expansion procedure where the electronic computer reads out the values of $r(\chi)$ and $s(\chi)$, based on the following formula in which s(x)-adic expansion of said $r(\chi)$ is performed using said s(x),

[F50]

$$r(\chi) = \sum_{i=0}^{\lceil \deg r(\chi)/\deg s(\chi) \rceil} D_i(\chi)s(\chi)^i, \ 0 \le \deg(D_i(\chi)) < deg(s(\chi))$$

performs assignment operations represented by $D_i(\chi) \leftarrow r(\chi)\%s(\chi)$ and $r(\chi) \leftarrow (r(\chi)-D_i(\chi))/s(\chi)$ repeatedly from i=0 to $i < \lceil \deg r(\chi)/\deg s(\chi) \rfloor$, and stores the values of the coefficient $D_i(\chi)$ and said r(x) in the memory means;
an auxiliary extraction procedure where the electronic computer extracts $D_i(\chi)$ having the maximum $\deg(D_i(\chi))$ among the stored coefficients $D_i(\chi)$ as $D_{dmax}(\chi)$ and stores said $D_{dmax}(\chi)$ in the memory means;
an auxiliary specifying procedure where the electronic computer reads out the values of said $D_{dmax}(\chi)$, $D_i(\chi)$, and q, using a polynomial $f(q, \chi)$ which satisfies

$$(A^{\{D_{dmax}(\chi)\}})^{\{q^{dmax}\}} = A^{\{\sum_{i \ne dmax} -D_i(\chi)q^i\}} = A^{\{f(q,\chi)\}},$$

based on $\phi_q^k(A)=A$,
specifies a polynomial $h(q, \chi)$ which satisfies

$$A^{\{D_{dmax}(\chi)\}} = A^{\{\sum_{i \ne dmax} -D_i(\chi)q^i - q^{dmax}\}} = A^{\{h(q,\chi)\}},$$

, and stores the value of the polynomial $h(q, \chi)$ in the memory means; and
a procedure where the electronic computer , letting $\chi = a$, replaces s-adic expansion of said n with $D_{dmax}(a)$-adic expansion with $s = D_{dmax}(a)$ and uses the polynomial $h(\phi_q, a)$ in place of said $D_{dmax}(a)$.

**12.** The computer readable recording medium recording an exponentiation program according to claim 11, wherein there exist a plurality of coefficients $D_i(\chi)$ having the maximum degree dmax in the coefficients $D_i(\chi)$, and the auxiliary input procedure further includes a procedure where the electronic computer inputs a value of $m(\chi)$ which satisfies $r(\chi)|m(\chi)$ and stores the value in the memory means,
the exponentiation program further causing the electronic computer to perform:

a second auxiliary specifying procedure where the electronic computer, letting coefficients of $\chi^{dmax}$ which are terms having the maximum degree dmax of $deg(D_i(\chi))$ be $T_{dmax}(q)$, reads out coefficient $D_i(\chi)$ from the memory means, allocates $T(q, \chi)$ and $U(q, \chi)$ with initial values of 0 in the memory means, performs an assignment operation, when $deg(D_i(\chi)) = dmax$ holds true, represented by $T(q, \chi) \leftarrow T(q, \chi) + D_i(\chi)q^i$ and when otherwise, represented by $U(q, \chi) \leftarrow U(q, \chi) + D_i(\chi)q^i$ repeatedly from i=0 to i<$\lceil degr(\chi)/degs(\chi) \rfloor$, stores the values of $T(q, \chi)$ and $U(q, \chi)$ in the memory means and specifies a maximum degree coefficient $T_{dmax}(q)$;
a third auxiliary specifying procedure where the electronic computer reads out the values of $m(\chi)$ and $r(\chi)$ from the memory means, using a minimum degree polynomial $m(\chi)$ which satisfies $r(\chi)|m(\chi)$, specifies $V(q)$ which satisfies

$$V(q)\,|\,m(q)\,,\ \ gcd(T_{dmax}(q),V(q))=1$$

by performing assignment operations represented by $W(q) \leftarrow gcd(T_{dmax}(q), m(q))$ and $V(q) \leftarrow W(q)$, and stores the value of said $V(q)$ in the memory means;
a fourth auxiliary specifying procedure where the electronic computer reads out the values of $V(q)$ and $m(q)$, specifies an integer scalar v and $g(\phi_q)$ which satisfy

$$g(q)V(q) \equiv v(mod\ m(q))$$

by performing an extended Euclidian algorithm, and stores the values of the scalar v and $g(q)$ in the memory means;
a fifth auxiliary specifying procedure where, in place of the auxiliary specifying step, the electronic computer reads out each value of $T_{dmax}(q)$, $\chi^{dmax}$, $D_i(\chi)$, and Q, using a polynomial $f(q, \chi)$ which satisfies

$$A^{\wedge}\{T_{dmax}(q)\ \chi^{dmax}\} = A^{\wedge}\{\ \textstyle\sum D_i(\ \chi\ )q^i - T_{dmax}(q)\ \chi^{dmax})$$

$$= A^{\wedge}\{f(q,\ \chi\ )\}$$

and said $g(q)$, based on $\phi_q{}^k(A) = A$, specifies a polynomial $h(q, \chi)$ which satisfies

$$A^{\wedge}\{v\,\chi^{dmax}\} = A^{\wedge}\{g(q)f(q,\ \chi\ )\} = A^{\wedge}\{h(q,\ \chi\ )\}$$

, and stores the value of the polynomial $h(q, \chi)$ in the memory means; and
a procedure where the electronic computer reads out the value of said $h(q, \chi)$ from the memory means, using a constant term $h(0, \chi)$ of $h(q, \chi)$ with respect to q satisfies

$$A^{\wedge}\{v\,\chi^{dmax} - h(0,\ \chi\ )\} = A^{\wedge}\{h(q,\ \chi\ ) - h(0,\ \chi\ )\}$$

performs, letting $\chi$ =a, assignment operations represented by $s'=va^{dmax}-h(0, a)$ and $h'(q)=h(q,a)-h(0,a)$, stores the values of $s'$ and $h'(q)$ in the memory means, performs $(Va^{dmax}-h(0,a))$-adic expansion of said n which is performed s-adic expansion instead of performing $D_{dmax}(a)$ -adic expansion and uses $h(q, a)-h(0, a)$ in place of $va^{dmax}-h(0, a)$.

# Fig. 1

# Fig. 2

START

INPUT SCALAR n, TRACE t, RATIONAL POINT Q — S101

$Z \leftarrow O$ — S102

COMPUTE $T[j] = 2^j Q$ A — S103

s(=t-1)-adic EXPANSION OF SCALAR n — S104

COMPUTE $Q[i] = c[i]Q$ — S105

COMPOSE Z=nQ USING Q[i] — S106

OUTPUT Z — S107

RETURN

# Fig. 3

```
                    ┌─────────────┐
                    │    START    │
                    └─────────────┘
                           │
                           ▼
      ┌───────────────────────────────────────────┐
S201  │         INPUT SCALAR n, s=D_dmax(a),       │
      │  h'(φ_Q)=h(φ_Q,a), RATIONAL POINT Q        │
      └───────────────────────────────────────────┘
                           │
                           ▼
      ┌───────────────────────────────────────────┐
S202  │                   Z←O                      │
      └───────────────────────────────────────────┘
                           │
                           ▼
      ┌───────────────────────────────────────────┐
S203  │           COMPUTE T[j]=2^j Q               │
      └───────────────────────────────────────────┘
                           │
                           ▼
      ┌───────────────────────────────────────────┐
S204  │       s-adic EXPANSION OF SCALAR n         │
      └───────────────────────────────────────────┘
                           │
                           ▼
      ┌───────────────────────────────────────────┐
S205  │     φ_q-adic EXPANSION OF SCALAR n         │
      └───────────────────────────────────────────┘
```

S201 INPUT SCALAR n, $s = D_{dmax}(a)$, $h'(\varphi_Q) = h(\varphi_Q, a)$, RATIONAL POINT Q

S202 $Z \leftarrow O$

S203 COMPUTE $T[j] = 2^j Q$

S204 s-adic EXPANSION OF SCALAR n

S205 $\varphi_q$-adic EXPANSION OF SCALAR n

S207 ADJUST COEFFICIENT of $\varphi_q$-adic EXPANSION

S206 COEFFICIENT OF $\varphi_q$-adic EXPANSION LESS THAN s ?

NO

YES

S208 COMPUTE $Q[i] = d[i]Q$

S209 COMPOSE $Z = nQ$ USING $Q[i]$

S210 OUTPUT Z

RETURN

# Fig. 4

START

INPUT $r(\chi)$, $t(\chi)$  —— S221

$s(\chi)$-adic EXPANSION OF $r(\chi)$ —— S222

EXTRACT AND OUTPUT $D_{dmax}(\chi)$ —— S223

COMPUTE AND OUTPUT $h(\varphi_q, \chi)$ —— S224

RETURN

# Fig. 5

START

S301 — INPUT SCALAR n, $s' = va^{dmax} - h(0, a)$, $h'(\varphi_q) = h(\varphi_q, a) - h(0, a)$, rational

S302 — $Z \leftarrow O$

S303 — COMPUTE $T[j] = 2^j Q$

S304 — $s'$-adic EXPANSION OF SCALAR

S305 — $\varphi_q$-adic EXPANSION OF SCALAR n

S306 — COEFFICIENT OF $\varphi_q$-adic EXPANSION LESS THAN $s'$ ?

NO

ADJUST COEFFICIENT OF $\varphi_q$-adic EXPANSION

S307

YES

S308 — COMPUTE $Q[i] = c[i] Q$

S309 — COMPOSE $Z = nQ$ using $Q[i]$

S310 — OUTPUT Z

RETURN

# Fig. 6

```
                    ┌─────────────┐
                    │    START    │
                    └──────┬──────┘
                           ▼
        ┌──────────────────────────────────┐
        │   INPUT r(χ), t(χ), m(χ)          │─────∿─── S321
        └──────────────────┬───────────────┘
                           ▼
        ┌──────────────────────────────────┐
        │   s(χ)-adic EXPANSION OF r(χ)     │─────∿─── S322
        └──────────────────┬───────────────┘
                           ▼
        ┌──────────────────────────────────┐
        │   SPECIFY T(φq,χ), U(φq,χ)        │─────∿─── S323
        └──────────────────┬───────────────┘
                           ▼
        ┌──────────────────────────────────┐
        │   SPECIFY MAXIMUM DEGREE          │
        │   COEFFICIENT Tdmax(φq) OF        │─────∿─── S324
        │        T(φq,χ)                    │
        └──────────────────┬───────────────┘
                           ▼
        ┌──────────────────────────────────┐
        │  SPECIFY V(φq) USING MAXIMUM      │
        │  DEGREE COEFFICIENT Tdmax(φq)     │─────∿─── S325
        └──────────────────┬───────────────┘
                           ▼
        ┌──────────────────────────────────┐
        │  Specify scalar v and g(φq)       │
        │  USING EXTENDED EUCLIDIAN         │─────∿─── S326
        │           ALGORITHM               │
        └──────────────────┬───────────────┘
                           ▼
        ┌──────────────────────────────────┐
        │   COMPUTE h(φq,χ)                 │─────∿─── S327
        └──────────────────┬───────────────┘
                           ▼
        ┌──────────────────────────────────┐
        │   OUTPUT h(φq,χ) AND              │
        │   vχdmax-h(0,χ)                   │─────∿─── S328
        └──────────────────┬───────────────┘
                           ▼
                    ┌─────────────┐
                    │   RETURN    │
                    └─────────────┘
```

S321: INPUT $r(\chi)$, $t(\chi)$, $m(\chi)$

S322: $s(\chi)$-adic EXPANSION OF $r(\chi)$

S323: SPECIFY $T(\varphi_q, \chi)$, $U(\varphi_q, \chi)$

S324: SPECIFY MAXIMUM DEGREE COEFFICIENT $T_{dmax}(\varphi_q)$ OF $T(\varphi_q, \chi)$

S325: SPECIFY $V(\varphi_q)$ USING MAXIMUM DEGREE COEFFICIENT $T_{dmax}(\varphi_q)$

S326: Specify scalar $v$ and $g(\varphi_q)$ USING EXTENDED EUCLIDIAN ALGORITHM

S327: COMPUTE $h(\varphi_q, \chi)$

S328: OUTPUT $h(\varphi_q, \chi)$ AND $v\chi^{dmax} - h(0, \chi)$

# Fig. 7

```
            ┌──────────────┐
            │    START     │
            └──────┬───────┘
                   │
                   ▼
   ┌───────────────────────────────┐
   │      INPUT EXPONENT n,         │        S401
   │   DIFFERENCE s, ELEMENT A      │
   └───────────────┬───────────────┘
                   │
                   ▼
   ┌───────────────────────────────┐
   │            Z←1                 │        S402
   └───────────────┬───────────────┘
                   │
                   ▼
   ┌───────────────────────────────┐
   │      COMPUTE T[j]=A^{2^j}      │        S403
   └───────────────┬───────────────┘
                   │
                   ▼
   ┌───────────────────────────────┐
   │      s-adic EXPANSION OF       │        S404
   │         EXPONENT n             │
   └───────────────┬───────────────┘
                   │
                   ▼
   ┌───────────────────────────────┐
   │      COMPUTE A[i]=A^{c[i]}     │        S405
   └───────────────┬───────────────┘
                   │
                   ▼
   ┌───────────────────────────────┐
   │   COMPOSE Z=A^n using A[i]     │        S406
   └───────────────┬───────────────┘
                   │
                   ▼
   ┌───────────────────────────────┐
   │          OUTPUT Z              │        S407
   └───────────────┬───────────────┘
                   │
                   ▼
            ┌──────────────┐
            │   RETURN     │
            └──────────────┘
```

# Fig. 8

```
                    ┌──────────────┐
                    │    START     │
                    └──────┬───────┘
                           ▼
```

S501 — INPUT EXPONENT n, $s=D_{dmax}(a)$, $h'(q)=h(q,a)$, AND ELEMENT A

S502 — $Z \leftarrow 1$

S503 — COMPUTE $T[j]=A^{\{2^j\}}$

S504 — s-adic EXPANSION OF EXPONENT n

S505 — q-adic EXPANSION OF EXPONENT n

S506 — COEFFICIENT OF q-adic EXPANSION LESS THAN s ?

NO → S507 ADJUST COEFFICIENT OF q-adic EXPANSION

YES

S508 — COMPUTE $A[i]=A^{d[i]}$

S509 — COMPOSE $Z=A^n$ USING $A[i]$

S510 — OUTPUT Z

```
                    ┌──────────────┐
                    │   RETURN     │
                    └──────────────┘
```

# Fig. 9

START

INPUT $r(\chi)$, $s(\chi)$ —— S521

$s(\chi)$-adic EXPANSION OF $r(\chi)$ —— S522

EXTRACT AND OUTPUT $D_{dmax}(\chi)$ —— S523

COMPUTE AND OUTPUT $h(q,\chi)$ —— S524

RETURN

# Fig. 10

```
                    ┌─────────────┐
                    │    START    │
                    └──────┬──────┘
                           │
         ┌─────────────────▼─────────────────────┐
  S601 ──┤ INPUT EXPONENT n, s'=va^{dmax}-h(0,a), │
         │ h'(q)=h(q,a)-h(0,a), ELEMENT A         │
         └─────────────────┬─────────────────────┘
                           │
         ┌─────────────────▼─────────────────────┐
  S602 ──┤                Z←1                     │
         └─────────────────┬─────────────────────┘
                           │
         ┌─────────────────▼─────────────────────┐
  S603 ──┤         COMPUTE T[j]=A^{2^j}           │
         └─────────────────┬─────────────────────┘
                           │
         ┌─────────────────▼─────────────────────┐
  S604 ──┤  s'-adic EXPANSION OF EXPONENT n       │
         └─────────────────┬─────────────────────┘
                           │
         ┌─────────────────▼─────────────────────┐
  S605 ──┤  q-adic EXPANSION OF EXPONENT n        │
         └─────────────────┬─────────────────────┘
                           │
                           ▼
  ┌───────────┐        ╱─────────╲  S606
  │  ADJUST   │  NO   ╱ COEFFICIENT╲
  │COEFFICIENT│◄─────╱   OF q-adic  ╲
  │ OF q-adic │      ╲  EXPANSION   ╱
  │ EXPANSION │       ╲LESS THAN s'?╱
  └───────────┘        ╲─────────╱
   S607                    │ YES
                           ▼
         ┌─────────────────────────────────────┐
  S608 ──┤      COMPUTE A[i]=A^{d[i]}           │
         └─────────────────┬───────────────────┘
                           │
         ┌─────────────────▼───────────────────┐
  S609 ──┤   COMPOSE Z=A^n USING A[i]           │
         └─────────────────┬───────────────────┘
                           │
         ┌─────────────────▼───────────────────┐
  S610 ──┤            OUTPUT Z                  │
         └─────────────────┬───────────────────┘
                           │
                    ┌──────▼──────┐
                    │   RETURN    │
                    └─────────────┘
```

# Fig. 11

```
                    ┌─────────────┐
                    │    START    │
                    └─────────────┘
                           │
                           ▼
        ┌──────────────────────────────────┐
        │   INPUT r(χ), s(χ), m(χ)          │ ～～ S621
        └──────────────────────────────────┘
                           │
                           ▼
        ┌──────────────────────────────────┐
        │   s(χ)-adic EXPANSION OF r(χ)     │ ～～ S622
        └──────────────────────────────────┘
                           │
                           ▼
        ┌──────────────────────────────────┐
        │   SPECIFY T(q,χ) and U(q,χ)       │ ～～ S623
        └──────────────────────────────────┘
                           │
                           ▼
        ┌──────────────────────────────────┐
        │   SPECIFY MAXIMUM DEGREE          │
        │   COEFFICIENT Tdmax(q) OF         │ ～～ S624
        │         T(q,χ)                    │
        └──────────────────────────────────┘
                           │
                           ▼
        ┌──────────────────────────────────┐
        │   SPECIFY V(q) USING MAXIMUM      │
        │   DEGREE COEFFICIENT Tdmax(q)     │ ～～ S625
        └──────────────────────────────────┘
                           │
                           ▼
        ┌──────────────────────────────────┐
        │   SPECIFY SCALAR v AND g(q)       │
        │   USING EXTENDED EUCLIDIAN        │ ～～ S626
        │         ALGORITHM                 │
        └──────────────────────────────────┘
                           │
                           ▼
        ┌──────────────────────────────────┐
        │   COMPUTE h(q,χ)                  │ ～～ S627
        └──────────────────────────────────┘
                           │
                           ▼
        ┌──────────────────────────────────┐
        │   OUTPUT h(q,χ) AND               │
        │   vχ^dmax-h(0,χ)                  │ ～～ S628
        └──────────────────────────────────┘
                           │
                           ▼
                    ┌─────────────┐
                    │   RETURN    │
                    └─────────────┘
```

**EP 2 249 326 A1**

**PATENT COOPERATION TREATY**

# PCT

DECLARATION OF NON-ESTABLISHMENT OF INTERNATIONAL SEARCH REPORT
(PCT Article 17(2)(a), Rules 13*ter*.1(c) and 39)

| Applicant's or agent's file reference<br>OP00413PCT | **IMPORTANT DECLARATION** | Date of mailing *(day/month/year)*<br>21 April, 2009 (21.04.09) |
|---|---|---|
| International application No.<br>PCT/JP2009/053395 | International filing date *(day/month/year)*<br>25 February, 2009 (25.02.09) | (Earliest) Priority Date *(day/month/year)*<br>25 February, 2008 (25.02.08) |

| International Patent Classification (IPC) or both national classification and IPC<br>*G09C1/00 (2006.01)i* |
|---|

| Applicant<br>Okayama University |
|---|

This International Searching Authority hereby declares, according to Article 17(2)(a), that **no international search report will be established** on the international application for the reasons indicated below.

1. ☒ The subject matter of the international application relates to:
   - a. ☒ scientific theories.
   - b. ☒ mathematical theories.
   - c. ☐ plant varieties.
   - d. ☐ animal varieties.
   - e. ☐ essentially biological processes for the production of plants and animals, other than microbiological processes and the products of such processes.
   - f. ☐ schemes, rules or methods of doing business.
   - g. ☐ schemes, rules or methods of performing purely mental acts.
   - h. ☐ schemes, rules or methods of playing games.
   - i. ☐ methods for treatment of the human body by surgery or therapy.
   - j. ☐ methods for treatment of the animal body by surgery or therapy.
   - k. ☐ diagnostic methods practised on the human or animal body.
   - l. ☒ mere presentations of information.
   - m. ☐ computer programs for which this International Searching Authority is not equipped to search prior art.

2. ☒ The failure of the following parts of the international application to comply with prescribed requirements prevents a meaningful search from being carried out:
   ☒ the description       ☒ the claims       ☐ the drawings

3. ☐ A meaningful search could not be carried out without the sequence listing; the applicant did not, within the prescribed time limit:
   - ☐ furnish a sequence listing on paper complying with the standard provided for in Annex C of the Administrative Instructions, and such listing was not available to the International Searching Authority in a form and manner acceptable to it.
   - ☐ furnish a sequence listing in electronic form complying with the standard provided for in Annex C of the Administrative Instructions, and such listing was not available to the International Searching Authority in a form and manner acceptable to it.
   - ☐ pay the required late furnishing fee for the furnishing of a sequence listing in response to an invitation under Rule 13ter.1(a) or (b).

4. ☐ A meaningful search could not be carried out without the tables related to the sequence listings; the applicant did not, within the prescribed time limit, furnish such tables in electronic form complying with the technical requirements provided for in Annex C-bis of the Administrative Instructions, and such tables were not available to the International Searching Authority in a form and manner acceptable to it.

5. Further comments:

| Name and mailing address of the ISA/<br>Japanese Patent Office | Authorized officer |
|---|---|
| Facsimile No. | Telephone No. |

Form PCT/ISA/203 (April 2005)

61

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004271792 A
- JP 2007041461 A